## Europäisches Patentamt

## European Patent Office

## Office européen des brevets

(19)

(11) Veröffentlichungsnummer: **0 032 367**
**B1**

(12) **EUROPÄISCHE PATENTSCHRIFT**

(45) Veröffentlichungstag der Patentschrift:
**19.06.85**

(51) Int. Cl.⁴: **B 65 G 57/30, B 65 H 29/38**

(21) Anmeldenummer: **81100005.8**

(22) Anmeldetag: **02.01.81**

(54) Vorrichtung zum Stapeln von stapelbarem Gut, insbesondere von Mineralfaserplatten in einer Produktionslinie.

(30) Priorität: **09.01.80 DE 3000548**

(43) Veröffentlichungstag der Anmeldung:
**22.07.81 Patentblatt 81/29**

(45) Bekanntmachung des Hinweises auf die Patenterteilung:
**19.06.85 Patentblatt 85/25**

(84) Benannte Vertragsstaaten:
**AT BE CH DE FR GB IT LI LU NL SE**

(56) Entgegenhaltungen:
**AT - B - 213 338**
**DE - B - 1 221 148**
**DE - B - 2 364 751**
**DE - U - 7 220 758**
**FR - A - 1 573 293**
**US - A - 3 442 400**
**US - A - 3 861 537**

(73) Patentinhaber: **ISOVER SAINT-GOBAIN, Les Miroirs 18, avenue d'Alsace, F-92400 Courbevoie (FR)**

(84) Benannte Vertragsstaaten: **BE CH FR GB IT LI LU NL SE AT**

(73) Patentinhaber: **Grünzweig + Hartmann und Glasfaser AG, Bürgermeister-Grünzweig-Strasse 1-47, D-6700 Ludwigshafen am Rhein (DE)**

(84) Benannte Vertragsstaaten: **DE**

(72) Erfinder: **Horres, Johannes, Hinterer Rindweg 25, D-6802 Ladenburg (DE)**

(74) Vertreter: **KUHNEN & WACKER Patentanwaltsbüro, Schneggstrasse 3-5 Postfach 1729, D-8050 Freising (DE)**

## Beschreibung

Die Erfindung betrifft eine Vorrichtung zum Stapeln von stapelbarem Gut, insbesondere von Mineralfaserplatten in einer Produktionslinie, nach dem Oberbegriff des Anspruchs 1 bzw. des Anspruchs 2.

Es ist bereits eine Reihe von Stapelvorrichtungen bekanntgeworden, bei denen der Stapel in der Weise von unten her aufgebaut wird, daß der jeweils gebildete Teilstapel angehoben und eine neue Lage unter den Teilstapel eingefahren und an dessen Unterseite angelegt wird.

So ist beispielsweise aus der FR-A-1 573 293 eine Stapelvorrichtung bekannt, bei der gabelförmig ausgebildete Abstützelemente gleichzeitig von beiden Seiten zwischen Rollen einer die Stapelstützfläche bildenden Rollenbahn unter die darauf befindliche Lage von Artikeln eingreifen und diese so weit anheben, daß eine neue Lage auf die Stapelstützfläche auflaufen kann, die dann zur Bildung eines Teilstapels mit der angehobenen Lage zusammengeführt wird.

Die Lagen bestehen dabei aus Paketen. Wenn die neue Paketschicht oder Lage auf die Stapelstützfläche gelaufen ist, so wird der angehobene Teilstapel durch die Abstützelemente bzw. durch die zugehörige Hebeeinrichtung abgesenkt und die beidseitigen Abstützelemente bewegen sich in entgegengesetzten Richtungen nach beiden Seiten unter dem Teilstapel heraus, so daß dieser auf die neue Lage zu liegen kommt. Danach werden die Abstützelemente der Hebeeinrichtung nach unten geführt und greifen wiederum von beiden Seiten zwischen die Rollen der die Stapelstützfläche bildenden Rollenbahn ein und heben den so gebildeten neuen Teilstapel erneut an, um Platz für eine wiederum neue Lage zu schaffen, nach deren Einführung in den Stapelraum der Teilstapel wieder auf die neue Lage abgesetzt wird.

Diese Stapelvorrichtung arbeitet vergleichsweise langsam. Der Nutztakt zur Bildung des Stapels besteht lediglich in dem Hub der gabelförmigen Abstützelemente, mit dem der Teilstapel zur Vorbereitung des Einlaufs einer neuen Lage angehoben wird, während die Takte Absenken des Teilstapels auf die neue Lage — seitliches Ausrücken der Abstützelemente — Absenken der Abstützelemente unter die Ebene der neuen Lage — erneutes seitliches Einrücken der Abstützelemente unter die neue Lage Totzeiten ergeben, die keinerlei Beitrag zum Aufbau des Stapels leisten und während denen eine bereitstehende neue Lage vor dem Einlauf in den Stapelraum angehalten werden muß. Da aus Gründen der mechanischen Belastung die Bewegungsgeschwindigkeit der Abstützelemente begrenzt ist, ergibt sich ein entsprechend hoher Zeitbedarf für die Abstapelung der einzelnen Lagen. Da die Hubbewegung im Nutztakt etwa genau so schnell erfolgen kann wie die Absenkbewegung und erheblich schneller als die Ein- und Ausrückbewegungen mit längerem Bewegungsweg, ist die im Vergleich mit dem Zeitbedarf für den Nutztakt sehr hohe Totzeit unvermeidlich.

Zur Vermeidung solch großer, systembedingter Totzeiten ist es aus der DE-B2-2 364 751 bekannt, mit zwei Hebeeinrichtungen zu arbeiten, deren ebenfalls gabelförmige Abstützelemente den Teilstapel und die neue Lage jeweils auf der ganzen Breite abstützen. Dabei wird der Teilstapel durch die Abstützelemente der einen Hebeeinrichtung zunächst angehoben, so daß eine neue Lage in den Stapelraum einfahren kann. Während die Abstützelemente der einen Hebeeinrichtung den Teilstapel über der Ebene der neuen Lage halten, stehen die Abstützelemente der anderen Hebeeinrichtung unter der Ebene der neuen Lage. Sodann werden durch eine horizontale Relativbewegung zwischen dem Stapel und den Hebeeinrichtungen die Abstützelemente der einen Hebeeinrichtung auf der einen Seite unter dem Teilstapel herausgezogen und dieser damit auf die neue Lage abgesenkt, während gleichzeitig von der anderen Seite her die Abstützelemente der anderen Hebeeinrichtung unter die neue Lage einfahren. Während die Abstützelemente der letztgenannten Hebeeinrichtung den auf der neuen Lage abgesetzten Teilstapel zusammen mit der neuen Lage anheben, werden die Abstützelemente der anderen Hebeeinrichtung wieder abgesenkt und stehen bereit, unter die nächste neue Lage zu greifen, wenn die entsprechende horizontale Relativbewegung herbeigeführt wird.

Damit wird zwar die Größe der systemgemäßen Totzeiten theoretisch etwa halbiert, da die beiden Hebeeinrichtungen alternierend arbeiten und so bei einem vollen Arbeitstakt einer Hebeeinrichtung, bestehend aus den Einzeltakten Anheben — Ausfahren — Absenken — Einfahren, dem Teilstapel jeweils zwei neue Lagen hinzugefügt werden. In der Praxis jedoch tritt eine Verminderung des Zeitbedarfs für die Abstapelung einer neuen Lage nicht auf, da einerseits die Hebeeinrichtungen viel schwerer ausfallen, da die Abstützelemente jeder Hebeeinrichtung durch das gesamte Gewicht des Stapels, im Beispielsfalle eines Paketstapels, mit großem Hebelarm belastet sind, und andererseits die Wege zum Ein- und Ausrücken der Abstützelemente im Vergleich zu von beiden Seiten angreifenden Abstützelementen einer Hebeeinrichtung mehr als doppelt so groß werden. Daher müssen insgesamt erheblich größere Massen beschleunigt und längere Wege zurückgelegt werden, so daß der theoretische Vorteil der alternierenden Arbeitsweise zweier Hebeeinrichtungen in der Praxis nicht zum Tragen kommt.

Aus der DE-U-7 220 758 oder der US-A-3 442 400 ist eine weitere Variante einer solchen Stapelmethode von unten her bekannt, bei der die Stapelstützfläche als Hebebühne dient und die jeweils unterste Lage des angehobenen Teilstapels in der angehobenen Stellung der Hebebühne durch Abstützelemente einer oberen Haltevorrichtung erfaßt wird, die den Teilstapel in der angehobenen Stellung halten, wonach die Hebebühne für den Einlauf einer neuen Lage wieder abgesenkt werden kann. Um die jeweils unterste Lage bei der Abstützung in der angehobenen Stellung nicht durch seitlichen Druck zu belasten, was bei den auch dort gestapelten Paketschichten wie auch in den meisten anderen Fällen nicht zulässig ist, sind die Abstützelemente der Haltevorrichtung ebenfalls gabelförmig ausgebildet und horizontal derart verschieblich, daß sie aus dem Bereich unter dem zuvor gebildeten Teilstapel zu beiden Seiten herausgezogen werden können. Die Hebebühne muß die unterste Lage zunächst so weit anheben, daß sie unmittelbar an der Unterseite des Teilstapels bzw. der Abstützelemente anliegt, worauf diese unter gänzlicher Ablage des Teilstapels auf die neue Lage herausgezogen werden können; dann kann eine weitere Hubbewegung der Hebebühne erfolgen, bis die neue unterste Lage über die Ebene der Abstützelemente gelangt ist, so daß diese erneut einfahren und die neue unterste Lage mit dem darüberliegenden Teilstapel beim erneuten Absenken der Hebebühne in der angehobenen Stellung abstützen können.

Auch eine solche vertikal ortsfeste Haltevorrichtung ergibt aber keine Erhöhung der Arbeitsgeschwindigkeit gegenüber der erstgenannten Stapelmethode nach der FR-A-1 573 293, da an die Stelle der Hub- und Absenkbewegung der dortigen Abstützelemente lediglich die entsprechende Hub- und Absenkbewegung der Hebebühne tritt, während die Totzeit für das seitliche Ein- und Ausrücken der Abstützelemente unverändert besteht. Auch kann keine neue Lage einfahren, bis die Hebebühne, welche ja die Stapelstützfläche bildet, nicht wieder in ihre untere Stellung zurückgekehrt ist, so daß sich vom Zeitbedarf für die Abstapelung einer neuen Lage her dieselben Verhältnisse ergeben, wie sie weiter oben im Zusammenhang mit der Stapelmethode nach der FR-A-1 573 293 erläutert wurden.

Ausgehend von dem geschilderten Stand der Technik liegt der Erfindung die Aufgabe zugrunde, die Stapelvorrichtung nach der FR-A-1 573 293 bzw. die Stapelvorrichtung nach der DE-B2-2 364 751 so weiterzubilden, daß sich auf möglichst einfache Weise eine erhebliche Erhöhung der Abstapelgeschwindigkeit erzielen läßt, welche einen Einsatz der erfindungsgemäßen Vorrichtung insbesondere zum Abstapeln von Mineralfaserplatten in einer Produktionslinie mit kontinuierlicher und schneller Aufeinanderfolge von Mineralfaserplatten oder -formationen ermöglicht.

Die Lösung dieser Aufgabe erfolgt durch die kennzeichnenden Merkmale des Anspruchs 1 bzw. des Anspruchs 2.

Durch die kennzeichnenden Merkmale des Anspruchs 1 wird erreicht, daß eine alternierende Arbeitsweise zweier Hebeeinrichtungen auch dann erfolgen kann, wenn jede Hebeeinrichtung in der gattungsgemäß beispielsweise aus der FR-A 1 573 293 bekannten Weise beidseitig in den Stapelraum ein- und aus ihm ausfahrbare Abstützelemente aufweist, so daß nicht auf die schwerer bauende und mit längeren Ein- und Ausfahrwegen arbeitende Ausbildung der Hebeeinrichtungen nach der DE-B2-2 364 751 zurückgegriffen werden muß. Gemäß Anspruch 2 kann jedoch auch auf eine Ausbildung der Hebeeinrichtung und der Abstützelemente über die gesamte Breite des Stapels reichend gemäß der DE-B2-2 364 751 zurückgegriffen werden, wobei jedoch dann an jeder Seite des Stapelraums der Vorrichtung je zwei Hebeeinrichtungen mit über die ganze Stapelbreite reichenden Abstützelementen vorgesehen sind, so daß einer der vier Sätze von Abstützelementen gerade einen Arbeitshub ausführen kann, während die übrigen drei Sätze von Abstützelementen in den Leertakten Ausfahren — Absenken — Einfahren laufen. Die alternierende Arbeitsweise von vier Hebeeinrichtungen bewirkt, daß bei einer gegebenen Arbeitstaktzahl oder Abstapelgeschwindigkeit eine geringere Absolutgeschwindigkeit der Maschinenteile erforderlich ist. In jedem Falle sind nach der Erfindung die Abstützelemente einer Hebeeinrichtung gegenüber denjenigen wenigstens einer anderen Hebeeinrichtung nicht nur in vertikaler Richtung, sondern auch in horizontaler Richtung relativbeweglich und wird eine alternierende Arbeitsweise von an derselben Seite des Stapels angeordneten Sätzen von Abstützelementen dadurch erzielt, daß die Abstützelemente einer Hebevorrichtung die an derselben Seite des Stapelraums angeordneten Abstützelemente einer anderen Hebeeinrichtung bei der vertikalen Relativbewegung durchdringen, so daß die z. B. gabelförmigen Abstützelemente unterschiedlicher Hebeeinrichtungen abwechselnd über- und untereinander stehen können.

Durch die ortsfeste Stapelstützfläche wird gegenüber einer Ausbildung der Stapelstützfläche als Hebebühne weiterhin in jedem Falle erreicht, daß sofort nach Anheben der eingelaufenen neuen Lage die Stapelstützfläche frei ist zum Einlauf der nächsten Lage.

Hierdurch ergibt sich der wesentliche Vorteil, daß jede auf die Stapelstützfläche eingelaufene neue Lage unverzüglich in eine Höhenlage angehoben wird, welche einen Einlauf der nächstfolgenden Lage gestattet, und während der weiteren Arbeitsschritte in wenigstens dieser Höhenlage verbleibt. Somit steht der Stapelraum sofort nach dem Anheben einer Lage für den Einlauf einer neuen Lage zur Verfügung, und können die zur Vorbereitung eines Anhebens dieser neuen Lage erforderlichen Arbeitstakte durchgeführt werden, während die neue Lage in den Stapelraum einläuft. Bei geeigneter Ausbildung und Steuerung der Hebeeeinrichtung ergibt sich somit der theoretisch kürzestmögliche Abstand zwischen aufeinanderfolgenden, in den Stapelraum einlaufenden Lagen durch das Zeitintervall, der erforderlich ist, um eine in den Stapelraum eingelaufene Lage von der Stapelstützfläche in eine solche Höhe abzuheben, in der eine neue Lage unter die zuvor eingelaufene Lage einlaufen kann.

Die Erfindung wird nachstehend anhand zeichnerisch dargestellter Ausführungsformen näher erläutert. Es zeigt

Fig. 1 in zwei Teilen I und II auf zwei Blatt Zeichnungen schematisch vereinfacht eine Draufsicht auf eine Produktionslinie zur Herstellung von Mineralfaserplatten mit Abstapelung in einer erfindungsgemäßen Vorrichtung und anschließender Verpackung,

Fig. 2 schematisch vereinfacht eine perspektivische Darstellung der wesentlichen Teile einer erfindungsgemäßen Vorrichtung und ihrer Lage zueinander, wobei die obere Hebeeinrichtung mit ihren Abstützelementen zur Verbesserung der Übersichtlichkeit als von der unteren Hebeeinrichtung und der Stapelstützfläche nach oben abgezogen dargestellt ist,

Fig. 3 in Einzeldarstellungen a) bis d) eine schematische Veranschaulichung einer möglichen Arbeitsweise der Vorrichtung gemäß Fig. 2,

Fig. 4 in Einzeldarstellungen a) bis k) eine schematische Veranschaulichung einer anderen möglichen Arbeitsweise der Vorrichtung gemäß Fig. 2, und in Einzeldarstellungen I) bis v) eine schematische Veranschaulichung des Stapelraums von der Seite her gesehen mit dem davorliegenden Teil der Produktionslinie, wobei jede der Einzeldarstellungen I) bis v) einer der Stellungen der erfindungsgemäßen Vorrichtung gemäß den Einzeldarstellungen a) bis k) entspricht,

Fig. 5 in vergrößerten Einzeldarstellungen a) bis e) die Stellung der Abstützelemente in strichpunktierten Kreisen Va, Ve in den Fig. 4c und d während des Durchlaufs dieser Stellungen sowie in Zwischenstellungen, und

Fig. 6 in Einzeldarstellungen a) bis k) eine schematische Veranschaulichung einer im wesentlichen der Arbeitsweise gemäß Fig. 4 entsprechenden Arbeitsweise einer gegenüber der Darstellung in Fig. 2 abgewandelten Ausführungsform der erfindungsgemäßen Vorrichtung.

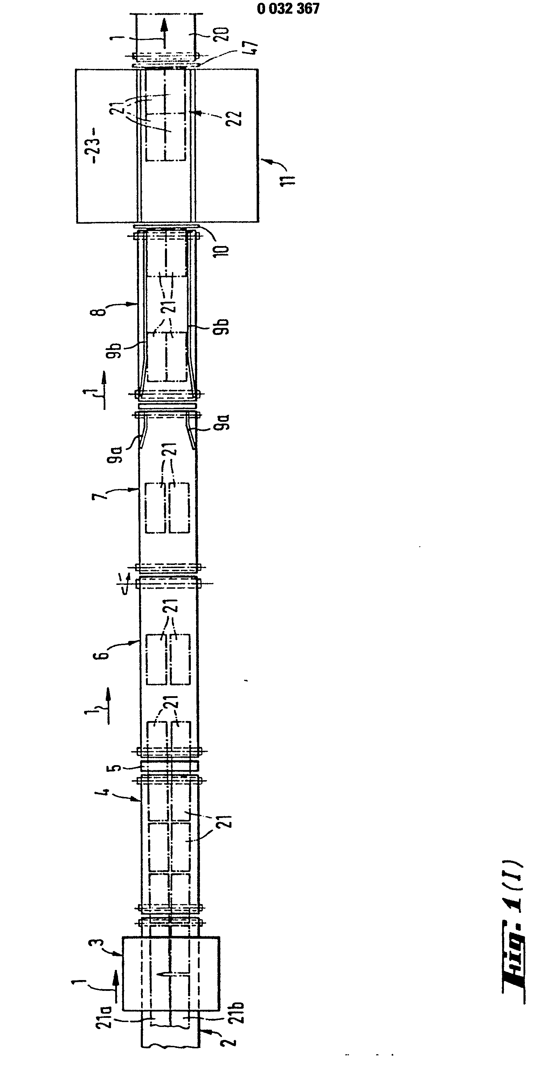

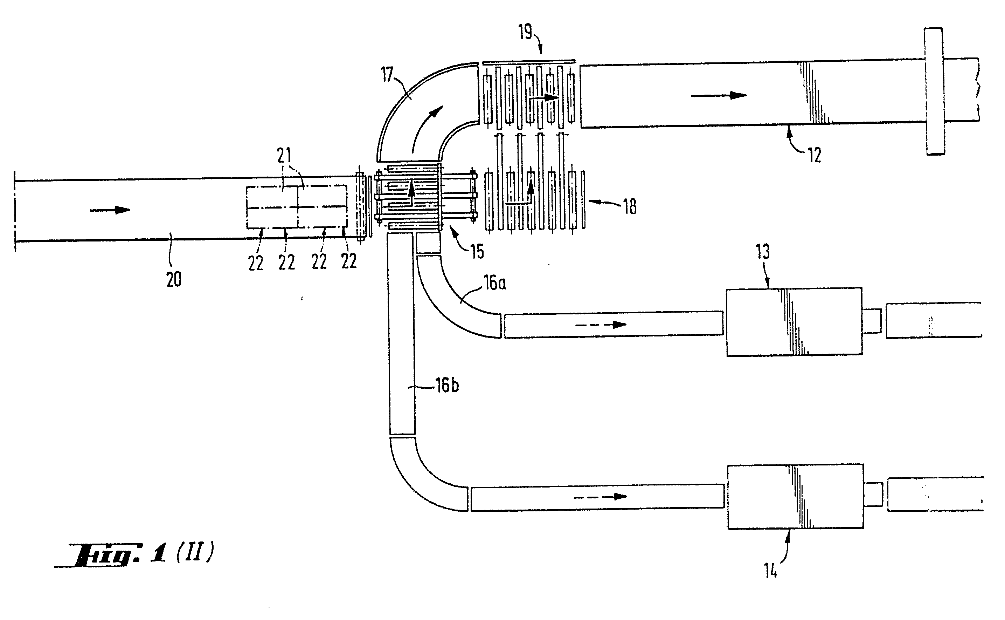

Obwohl die Erfindung nicht auf den Anwendungsfall einer Stapelung von Mineralfaserplatten oder ähnlichen Platten in einer Produktionslinie beschränkt ist, soll nachfolgend anhand von Fig. 1 zunächst der Aufbau und die Arbeitsweise einer solchen Produktionslinie verdeutlicht werden, da die erfindungsgemäße Vorrichtung besonders geeignet ist zur Erfüllung der Anforderungen, wie sie typischerweise in solchen oder ähnlichen, kontinuierlich arbeitenden Produktionslinien auftreten.

Die von Faserherstellungsköpfen aus der Schmelze in bekannter Weise erzeugten und angelieferten Mineralfasern werden mit Zusatzstoffen wie Bindemittel versehen und zur Weiterbehandlung wie etwa Trocknung unter Bildung eines Faservlieses auf ein Transportband kontinuierlich abgelegt, dessen Ende in Fig. 1 an deren in Laufrichtung der Produktionslinie bzw. Produktionsrichtung gemäß Pfeil 1 vorderen Ende bei 2 angedeutet ist. Sofern gegenüber der sich aus Anordnung und Anzahl der Faserherstellungsköpfe ergebenden Produktionsbreite schmalere Mineralfaserplatten hergestellt werden sollen, kann das Vlies auf seinem Transport in an sich bekannter Weise, beispielsweise durch Hochdruckwasserstrahlen, in mehrere Längsstreifen 21a; 21b zerschnitten werden. Am Ende des Transportbandes 2 ist eine Säge 3 angeordnet, welche das Vlies nach Art einer sogenannten fliegenden Schere in Querrichtung zur Produktionsrichtung gemäß Pfeil 1 schneidet, um die gewünschte Längserstreckung der Mineralfaserplatten herzustellen.

Die an der in Produktionsrichtung gemäß Pfeil 1 rückwärtigen Seite der Säge 3 austretenden Platten werden von einem Riemenband 4 übernommen, welches mit gleicher Geschwindigkeit wie das Transportband 2 läuft, und beim vorliegenden Beispiel einer Walkeinrichtung 5 zugeführt. An die Walkeinrichtung 5 schließt ein Beschleunigungsband 6 an, welches die aus der Walkeinrichtung 5 austretenden Platten gegenüber der Geschwindigkeit auf dem Transportband 2 und dem Riemenband 4 beschleunigt und so in dem Sinne vereinzelt, daß zwischen aufeinanderfolgenden Platten oder Plattenreihen Abstände entstehen. Vom Beschleunigungsband 6 aus gelangen die so vereinzelten Platten über ein Ausrichtband 7 auf ein Stauband 8, und passieren dabei schienenförmige Ausrichtelemente 9a und 9b, welche die ankommenden Platten gegenüber der Mittelachse der Produktionslinie zentrisch ausrichten und Lücken neben seitlich nebeneinander angeordneten Platten schließen. Am Ende des Staubandes 8 ist etwa in Form einer Staubolzenreihe ein Stauanschlag 10 vorgesehen, mit dem die mit der Geschwindigkeit des Beschleunigungsbandes 6 über das Ausrichtband 7 auf das Stauband 8 übergebenden Platten selektiv abgestoppt werden können.

Hinter dem Stauanschlag 10 schließt sich eine insgesamt mit 11 bezeichnete Stapelvorrichtung an, deren Aufbau und Funktionsweise weiter unten näher erläutert wird. In der Stapelvorrichtung 11 werden die einlaufenden Platten in Lagen übereinandergestapelt, bis die gewünschte Stapelhöhe erreicht ist, wonach der fertige, paketartige Stapel in Produktionsrichtung gemäß Pfeil 1 an der Rückseite der Stapelvorrichtung 11 auf ein Auslaufband 20 läuft und je nach Plattenbzw. Verpackungsart einer anschließenden Verpackungsstation 12, 13 oder 14 zugeführt wird. Hierzu gelangen die Stapel vom Auslaufband 20 aus zunächst auf eine Winkelübergabestation 15, von wo aus die Übergabe entweder an einer Seite auf Transportbänder 16a und 16b oder auf der anderen Seite auf eine Transporteinrichtung 17, oder aber in Produktionsrichtung weiterlaufend auf eine weitere Winkelübergabestation 18 erfolgt; die Winkelübergabestation 18 übergibt an eine weitere Winkelübergabestation 19 in Verlängerung der Transporteinrichtung 17 am Einlauf der Verpackungsstation 12. Die Verpackungsstation 12 kann also von der Winkelübergabestation 15 aus entweder über die Transporteinrichtung 17 erreicht werden, wobei die Stapel gegenüber der Ausrichtung auf dem Auslaufband 20 durch die Krümmung der Transporteinrichtung 17 (vgl. Fig. 1, Teil II) um 90° gedreht werden, oder aber über die Winkelübergabestationen 18 und 19, zwischen denen lediglich eine Parallelverschiebung der Stapel erfolgt, so daß deren Ausrichtung gegenüber der Ausrichtung auf dem Auslaufband 20 nicht geändert wird.

Der vorstehend prinzipiell dargestellte Aufbau des Endbereichs der Produktionslinie mit der Stapelvorrichtung 11 wird hinsichtlich seiner Arbeitsweise nachfolgend anhand einer konkreten Ausführungsform noch näher erläutert. Die dargestellte Produktionslinie möge ausgelegt sein zur Erzeugung von Mineralfaserplatten mit stark schwankenden Abmessungen, etwa eine Länge der Platten zwischen 330 und 3200 mm, einer Breite der Platten zwischen 250 und 1250 mm und einer Höhe der Platten zwischen 10 mm und 200 mm, wobei das Faservlies zur Erzeugung von bis zu 5 Platten geringerer Breite nebeneinander in Produktionsrichtung gemäß Pfeil 1 vor der Säge 3 in parallele Streifen geschnitten sein kann. Im Beispielsfalle sei angenommen, daß Platten mit einer Länge von 1500 mm und einer Breite von 600 mm hergestellt werden sollen, und es ist für diesen Fall in Fig. 1 strichpunktiert die Anordnung der mit 21 bezeichneten einzelnen Mineralfaserplatten auf der Produktionslinie zu einem bestimmten Moment festgehalten. Das Transportband 2 der Produktionslinie möge dabei mit einer Geschwindigkeit von 30 m/min laufen, und führt zwei mit 21a und 21b bezeichnete, nebeneinander liegende Streifen des Fasermaterials der Säge 3 zu. Die Säge 3 läuft mit einer Taktzahl von 20 min$^{-1}$, führt also in der Minute 20 Schnitte in gleichen Zeitabständen aus, so daß die Streifen 21a und 21b im Bereich der Säge 3 in Abständen von jeweils 1500 mm einen Querschnitt erhalten; bei der gewählten Darstellung wird im Bereich der Säge 3 gerade ein solcher Querschnitt eingebracht. Die so gebildeten Mineralfaserplatten 21 mit einer Breite von 600 mm, welche der Breite der Streifen 21a und 21b entspricht, und einer Länge von 1500 mm, laufen hinter der Säge 3 im wesentlichen ohne Relativbewegung auf dem Riemenband 4 weiter zur Walkeinrichtung 5. Sobald die hinteren Enden der Mineralfaserplatten 21 aus dem Eingriffsbereich der Walkeinrichtung 5 austreten, werden die Mineralfaserplatten 21 paarweise nebeneinanderliegend durch das Beschleunigungsband 6 beschleunigt. Das Beschleunigungsband 6 möge ebenso wie das Ausrichtband 7 und das Stauband 8 sowie das Ausfahrband 20 mit einer Geschwindigkeit von etwa 90 m/min, also etwa der dreifachen Geschwindigkeit des Transportbandes 2 und des Riemenbandes 4 laufen. Dadurch werden die nebeneinanderliegenden Paare der Mineralfaserplatten 21 derart vereinzelt, daß zwischen aufeinanderfolgenden Plattenpaaren Abstände in der Größenordnung von 3000 mm auftreten, was bei einer Laufgeschwindigkeit der schneller laufenden Bänder 6, 7 und 8 einem zeitlichen Abstand zwischen der Hinterkante eines vorlaufenden Paares von Mineralfaserplatten 21 und der Vorderkante eines nachlaufenden Paares von Mineralfaserplatten 21 von etwa 2 s entspricht.

Durch den Stauanschlag 10 am hinteren Ende des Staubandes 8 ist gerade ein Paar von Mineralfaserplatten 21 angehalten, und steht das nachfolgende Paar von Mineralfaserplatten 21 kurz vor dem Auftreffen auf das rückwärtige Ende des angehaltenen Paares. Durch einen nicht näher dargestellten, im Bereich des Staubandes 8 angeordneten Schwingungsaufnehmer kann die beim Anschlag eines Plattenpaares an den Stauanschlag 10 auftretende Erschütterung gemessen werden, derart, daß nach einer vorgegebenen Anzahl von Erschütterungen, im Beispielsfalle nach zwei Erschütterungen, der Stauanschlag 10 für den Zeitraum aus dem Transportweg ausgefahren wird, den eine auf dem Stauband 8 aus mehreren nacheinander ankommenden Plattenformationen gebildete Stapel-Lage 22 benötigt, um mit ihrem rückwärtigen Ende den Bereich des Stauanschlages 10 zu überfahren. In der gewählten Momentdarstellung trifft das auf dem Stauband nachlaufende Plattenpaar 21 in knapp einer Sekunde auf den rückwärtigen Rand des bereits abgestoppten Plattenpaares 21 auf, und erzeugt dabei die vom Schwingungsaufnehmer ermittelte zweite Erschütterung, worauf beispielsweise mittels hydraulischer Ansteuerung die den Stauanschlag 10 bildenden Staubolzen über einen Zeitraum von etwa 3 s abgesenkt werden können, um die auf dem Stauband 8 gebildete Lage 22 aus vier Mineralfaserplatten 21 ohne weitere Relativbewegung in die Stapelvorrichtung 11 einfahren zu lassen. Selbstverständlich kann das hintere Ende der in die Stapelvorrichtung 11 einfahrenden Plattenformation auch mittels Lichtschranke od. dgl. ermittelt werden, wonach der Stauanschlag 10 wieder in seine Anschlagposition fährt und den vorderen Rand des dann nachfolgenden Paares von Mineralfaserplatten 21 wieder abstoppt.

Im Bereich der Stapelvorrichtung 11 befindet sich ein Stapelraum 23, in dem die Übereinanderstapelung einer Mehrzahl von Lagen 22 in der weiter unten näher erläuterten Weise erfolgt. Im Beispielsfalle möge vor den im Bereich des Staubbandes 8 angeordneten beiden Plattenpaaren 21 gerade eine erste Lage 22 eines neuen Stapels in die Stapelvorrichtung 10 eingefahren sein, und ist im Bereich des Endes des Auslaufbandes 20 kurz vor der Winkelübergabestation 15 ein fertiger Stapel aus einer Mehrzahl übereinandergestapelter Lagen 22 sichtbar, der über die Winkelübergabestationen 18 und 19 der Verpackungsstation 12 zugeführt werden möge.

Im gewählten Beispielsfalle laufen also kontinuierlich hintereinander mit einem Zeitabstand von etwa 6 s auf dem Stauband 8 gebildete Lagen 22 in den Stapelraum 23 der Stapelvorrichtung 11 ein, so daß die Abstapelung der Lagen 22 sowie die Abstapelung der letzten Lage 22 des Stapels samt Auslauf des fertigen Stapels innerhalb eines Zeittaktes von etwa 6 s erfolgen müssen. Wie ohne weiteres ersichtlich ist, ist die der Stapelvorrichtung 11 zur Verfügung stehende Taktzeit noch geringer, wenn bei unveränderlicher Produktionsgeschwindigkeit von 30 m/min entsprechend der Laufgeschwindigkeit des Transportbandes 2 ungünstigere Plattenlängen abgestapelt werden sollen, so beispielsweise eine Plattenlänge von etwas mehr als der Hälfte der nutzbaren Länge des Stapelraumes 23, im Beispielsfalle von mehr als 1600 mm, wenn als nutzbare Länge des Stapelraumes 23 3200 mm angenommen werden. Dann muß eine Bildung von Plattenformationen im Bereich des Staubandes 8 entfallen, so daß der Stauanschlag 10 dauernd abgesenkt bleibt und die Platten oder Plattenpaare 21, auf deren Breite die verstellbaren Ausrichtelemente 9a und 9b eingestellt sind, mit gegenüber der Geschwindigkeit der Bänder 6, 7 und 8 unverminderter Geschwindigkeit und ohne anzuhalten in den Stapelraum 23 einlaufen. Wie ohne weiteres einsichtig ist, ergibt sich bei einer Vergrößerung der Plattenlänge gegenüber dem angenommenen Beispiel von 1500 mm auf 1600 mm und unmittelbarem Einlauf einzeln in den Stapelraum 23 eine Taktgeschwindigkeit von nur wenig mehr als 3 s zur Abstapelung der einzelnen Lagen 22 in der Stapelvorrichtung 11 sowie zur Abstapelung der letzten Lage 22 des Stapels einschließlich Auslauf des fertigen Stapels. Die von der Stapelvorrichtung 10 zu fordernde Taktzeit wird natürlich in dem Maße noch weiter geringer, als die Produktionsgeschwindigkeit über 30 m/min hinaus angehoben werden soll, so daß sich bei einer vorgegebenen Taktzeit der Stapelvorrichtung 11 von beispielsweise 2 s für jede jeweils zu produzierende Plattenabmessung und Stapelausbildung eine maximal zulässige Produktionsgeschwindigkeit oberhalb von etwa 30 m/min ergibt, während unterhalb einer Produktionsgeschwindigkeit von etwa 30 m/min bei einer nutzbaren Länge des Stapelraums 23 von 3200 mm mit einer Taktzeit von etwa 2 s jede überhaupt stapelbare Plattengröße problemlos abgestapelt werden kann und für günstige Plattenmaße ohne Erhöhung der Produktionsgeschwindigkeit auf einen langsameren Betrieb der Stapelvorrichtung 11 als maximal möglich zurückgegriffen werden kann. So kann im Beispielsfalle statt einer einer Taktzeit von 2 s entsprechenden Taktzahl von 30 min⁻¹ auch jede geringere Taktzahl bis hinunter zu etwa 4,5 min⁻¹ eingestellt werden.

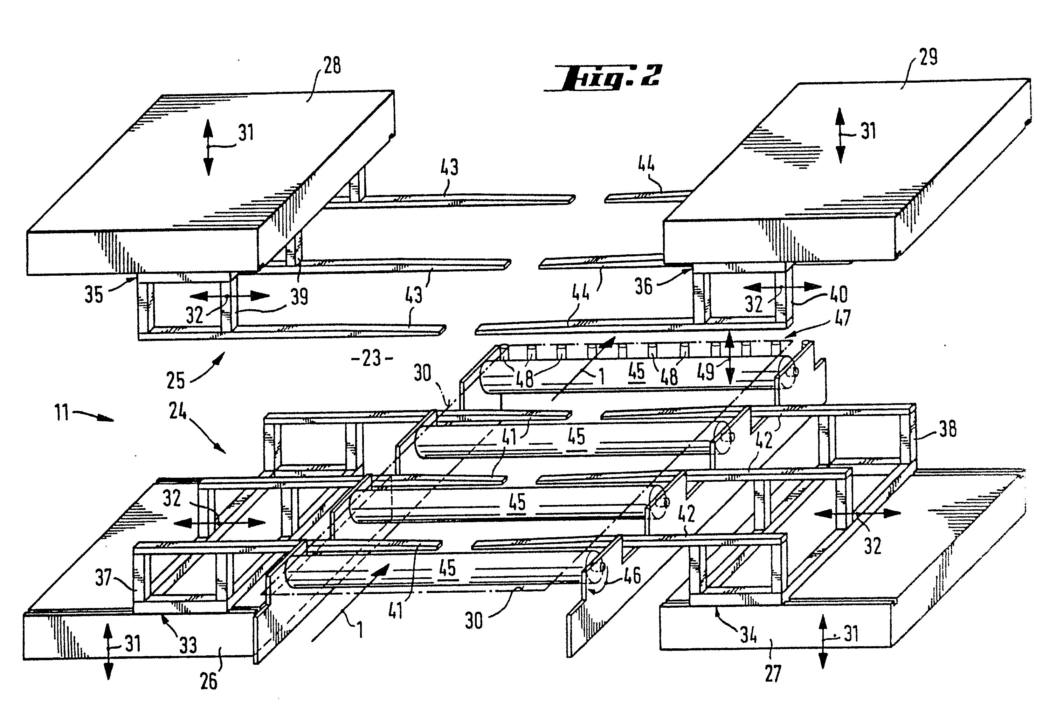

Der prinzipielle Aufbau der Stapelvorrichtung 11 wird nachfolgend anhand von Fig. 2 näher erläutert. Danach weist eine Stapelvorrichtung 11 gemäß der vorliegenden Ausführungsform zwei Hebeeinrichtungen 24 und 25 auf, wobei die untere Hebeeinrichtung 24 zu beiden Seiten einer die Unterseite des Stapelraumes 23 begrenzenden Stapelstützfläche 30 zwei Hubtische 26 und 27 und die obere Hebeeinrichtung 25 zwei entsprechend angeordnete Hubtische 28 und 29 besitzt. Die Hubtische 26, 27 und 28, 29 sind in nicht näher dargestellter Weise an vertikalen Führungen eines Maschinengestelles der Stapelvorrichtungg 11 gemäß den eingetragenen Doppelpfeilen 31 aufwärts und abwärts beweglich gehalten, wozu eine Vielzahl von konstruktiven Ausbildungen im einzelnen zur Verfügung steht. Als Hubantrieb für die Hubtische 26, 27 und 28, 29 können im Beispielsfalle Hydraulikzylinder dienen. Die jeweils Teil einer der Hebeeinrichtungen 24 oder 25 bildenden Hubtische 26 und 27 einerseits sowie 28 und 29 andererseits bewegen sich stets snychron in Richtung der Doppelpfeile 31, wozu die antreibenden Hydraulikzylinder paarweise volumetrisch aufeinander abgestimmt sein können, oder auf eine andere beispielsweise auch mechanische Gleichlaufsteuerung zurückgegriffen werden kann, wie dies an sich bekannt ist. Da die Hubtische 26, 27 einerseits und 28, 29 andererseits stets als Einheit synchron auf- und abbewegt werden, bilden sie zusammen jeweils nur eine einheitliche Hebeeinrichtung 24 bzw. 25.

An der Unterseite der oberen Hubtische 28 und 29 der oberen Hebeeinrichtung 25, die in Fig. 2 als gegenüber den übrigen dargestellten Teilen der Stapelvorrichtung 11 nach oben abgezogen dargestellt sind, um die Übersichtlichkeit zu verbessern, sind gemäß den eingezeichneten Doppelpfeilen 32 horizontal verfahrbare Schlitten 35 und 36 angeordnet, während an der Oberseite der unteren Hubtische 26 und 27 der unteren Hebeeinrichtung 24 ebenfalls gemäß den dort eingezeichneten Doppelpfeilen 32 horizontal verfahrbare Schlitten 33 und 34 angeordnet sind. An der Oberseite der unteren Schlitten 33 und 34 sind über Abstandshalter 37 und 38 im wesentlichen horizontal ausgerichtete, gabelförmige Abstützelemente 41, 42 im Abstand von den Hubtischen 26 und 27 bzw. den Schlitten 33 und 34 befestigt, während an der Unterseite der Schlitten 35 und 36 über Abstandshalter 39 und 40 gabelförmige Abstützelemente 43 und 44 mit Vertikalabstand unter den Hubtischen 28 und 29 sowie den Schlitten 35 und 36 befestigt sind. Dabei sind die gabelförmigen Abstützelemente 41 und 43 samt zugehörigen Abstandshaltern 37 und 39 an einer Seite der Stapelstützfläche 30 einerseits und die Abstützelemente 42 und 44 samt Abstandshaltern 38 und 40 an der gegenüberliegenden Seite der Stapelstützfläche 30 andererseits zueinander derart versetzt in Produktionsrichtung gemäß Pfeil 1 angeordnet, daß die Abstützelemente 41 und 43 sowie 42 und 44 nebeneinander vorbeitreten können, wenn die Hubtische 26 und 28 bzw. 27 und 29 gemäß Doppelpfeilen 31 aufeinander zu bewegt werden. Die vertikale freie Höhe der Abstandshalter 37, 38, 39 und 40 ist dabei so gewählt, daß bei der im Betrieb vorgesehenen engstmöglichen Anordnung der Hubtische 26, 27, 28 und 29 übereinander die Abstützelemente 43 und 44 an den oberen Hubtischen 28 und 29 in einem solchen Abstand unterhalb der Abstützelemente 41 und 42 an den unteren Hubtischen 26 und 27 zu liegen kommen, daß zwischen obenliegenden Abstützelementen 41 und 42 und untenliegenden Abstützelementen 43 und 44 bzw. der Stapelstützfläche 30 eine neue Lage 22 aus Mineralfaserplatten 21 auf die Stapelstützfläche 30 einfahren kann. Je nach der gewählten Arbeitsweise der Stapelvorrichtung 11 kann dieser maximale Abstand zwischen unteren Abstützelementen 41 und 42 und oberen Abstützelementen 43 und 44 ohne Schwierigkeiten durch entsprechende Bemessung der Abstandshalter 37, 38, 39 und 40 auch größer gewählt werden, so daß im Ergebnis eine gegenseitige Durchdringung der Abstützelemente 41, 42 einerseits und 43, 44 andererseits in einem solchen Umfange erzielt wird, wie dies für die den entsprechenden Maximalabstand aufweisende Arbeitsstellung im Betrieb erforderlich ist.

Die Abstützelemente 41 und 42 der Hebeeinrichtung 24 sowie die Abstützelemente 43 und 44 der Hebeeinrichtung 25 sind bei der dargestellten Ausführungsform untereinander jedoch nicht auf Lücke gesetzt, sondern liegen in jeder Betriebsstellung in Fluchtung zueinander. In der in Fig. 2 gewählten Darstellung sind die horizontal beweglichen Schlitten 33, 34, 35 und 36 jeweils in ihrer innersten, der Stapelstützfläche 30 benachbarten Stellung, wobei die Abstützelemente 41 und 42 einerseits sowie 43 und 44 andererseits jeder Hebeeinrichtung 24 bzw. 25 mit ihren Spitzen in geringem Abstand voneinander liegen. Gemäß Doppelpfeilen 32 können sämtliche Schlitten 33, 34, 35 und 36 aus der dargestellten Lage an den Hubtischen 26, 27, 28 und 29 entlang nach außen, weg von der Stapelstützfläche 30, verfahren werden, in eine Stellung, in der die einander zugewandten Enden der Abstützelemente 41, 42 und 43, 44 einen Abstand voneinander besitzen, der größer ist als die quer zur Produktionsrichtung gemäß Pfeil 1 gemessene Breite der Stapelstützfläche 30 bzw. des darauf zu bildenden Stapels. In einer solchen äußeren Lage sind die Abstützelemente 41, 42 und 43, 44 aus einem auf der Stapelstützfläche 30 gebildeten Stapel oder Teilstapel seitlich ausgefahren, während sie in der gewählten Darstellung eingefahren sind und dabei eine Lage 22 auf der Stapelstützfläche 30 von unten anheben können sowie oberhalb der Stapelstützfläche 30 in einer angehobenen Stellung abstützen können. In der Darstellung gemäß Fig. 2 sind die Abstützelemente 41 und 42 der unteren Hebeeinrichtung 24 unter der Stapelstützfläche 30 eingefahren und könnten daher eine auf der Stapelstützfläche 30 liegende Lage 22 von der Stapelstützfläche 30 abheben, während auf den Abstützelementen 43 und 44 der oberen Hebeeinrichtung 25 ein bereits zuvor gebildeter Teilstapel im Abstand oberhalb der Stapelstützfläche 30 gehalten werden könnte.

Die Stapelstützfläche 30 ist durch die oberen Scheitel von Rollen 45 einer Rollenbahn gebildet. Die Rollen 45 weisen einen gegenseitigen Abstand auf, der einen gleichzeitigen Eintritt der Abstützelemente 41, 42 einerseits und 43, 44 andererseits zwischen die Rollen unterhalb der Stapelstützfläche 30 gestatten, sind ansonsten jedoch so eng wie möglich benachbart angeordnet, um eine möglichst gleichmäßige Abstützung der Lagen 22 auf den Scheiteln der Rollen 45 zu ermöglichen. Zur Förderung der Lagen 22 in Produktionsrichtung 1 beim Einlauf und Auslauf der Lagen 22 sind die Rollen 45 gemäß Pfeil 46 antreibbar und werden je nach Bedarf oder dauernd angetrieben. Einzelne Rollen 45 können dabei eine Gummierung oder andere reibungserhöhende Mittel tragen, um gewünschte Beschleunigungen der Lagen 22 insbesondere beim Auslauf des fertigen Stapels aus dem Stapelraum 23 zu erzielen. Am in Produktionsrichtung gemäß Pfeil 1 hinteren Ende des Stapelraums 23 bzw. der Stapelstützfläche 30 ist ein Stauanschlag 47 vorgesehen, der im Beispielsfalle aus einer Reihe von Staubolzen 48 besteht, welche gemäß Doppelpfeil 49 angehoben oder abgesenkt werden können. In der angehobenen Stellung blockieren die Staubolzen 48 den Auslauf einer auf die Stapelstützfläche 30 aufliegenden Lage 22, so daß diese trotz gegebenenfalls dauernd laufender Rollen 45 auf der Stapelstützfläche 30 ruht und von den Abstützelementen 41, 42 oder 43, 44 ohne Relativbewegung von der Stapelstützfläche 30 abgehoben werden kann. Nach Bildung des fertigen Stapels werden die Staubolzen 48 beispielsweise hydraulisch abgesenkt, so daß der fertige Stapel, angetrieben von den Rollen 45, in Produktionsrichtung gemäß Pfeil 1 aus dem Stapelraum 23 aus und auf das Ausfahrband 20 auffahren kann, welches zumindest in seinem an die Stapelvorrichtung 11 anschließenden Bereich bei Bedarf ebenfalls durch Rollen gebildet werden kann, welche durch Gummierung od. dgl. eine hohe Beschleunigung des Stapels auf die Laufgeschwindigkeit des Ausfahrbands 20 ergeben.

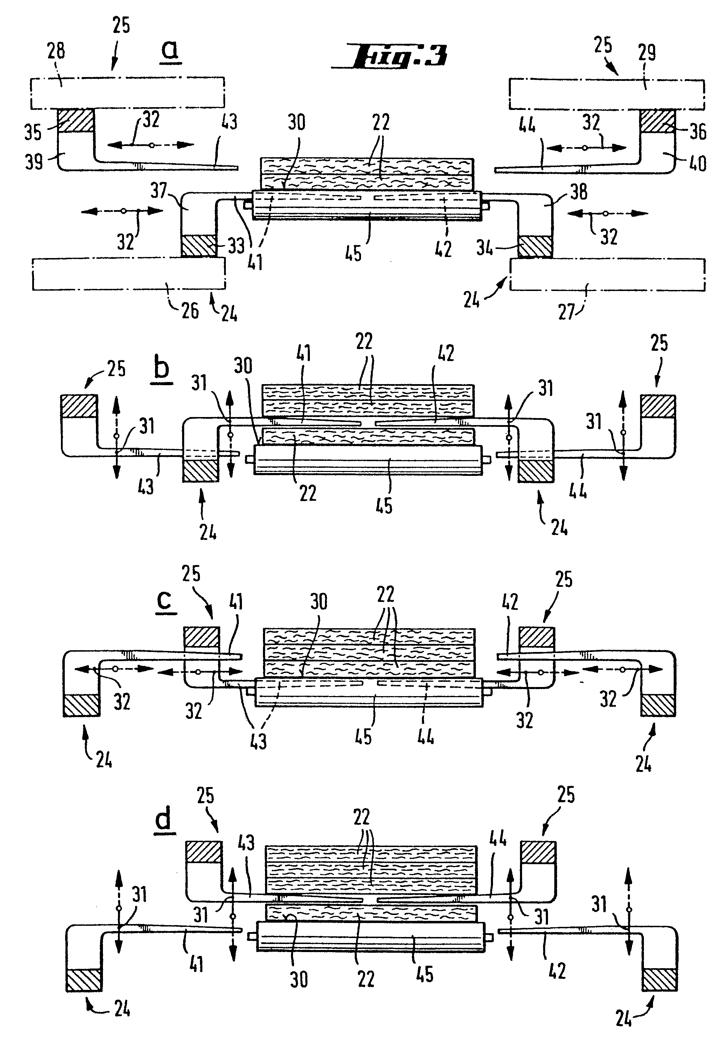

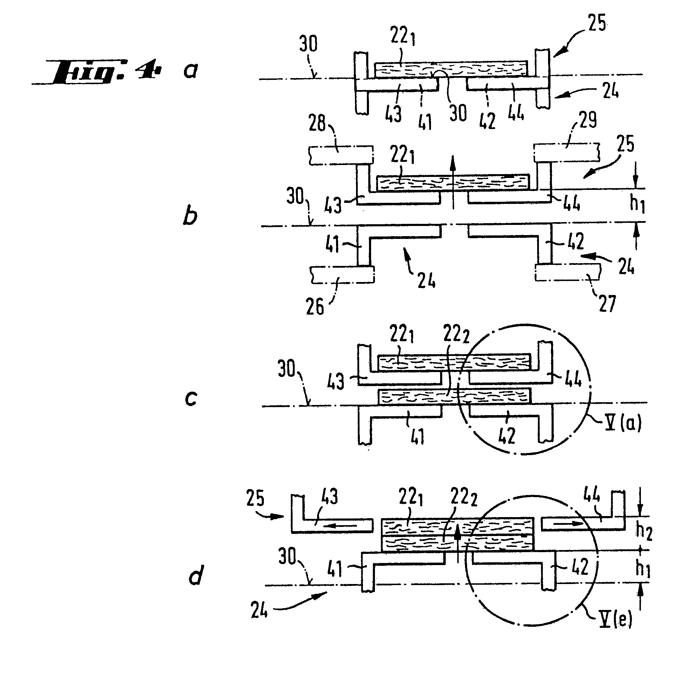

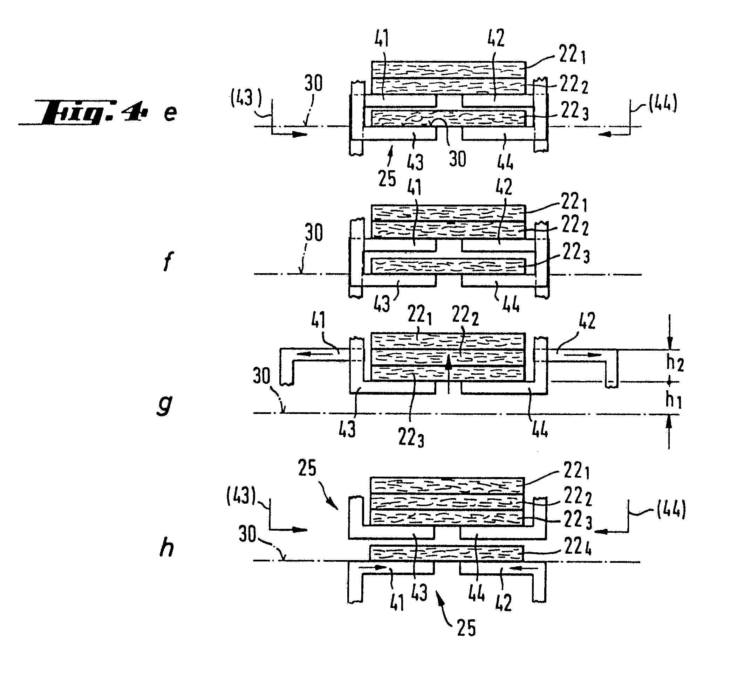

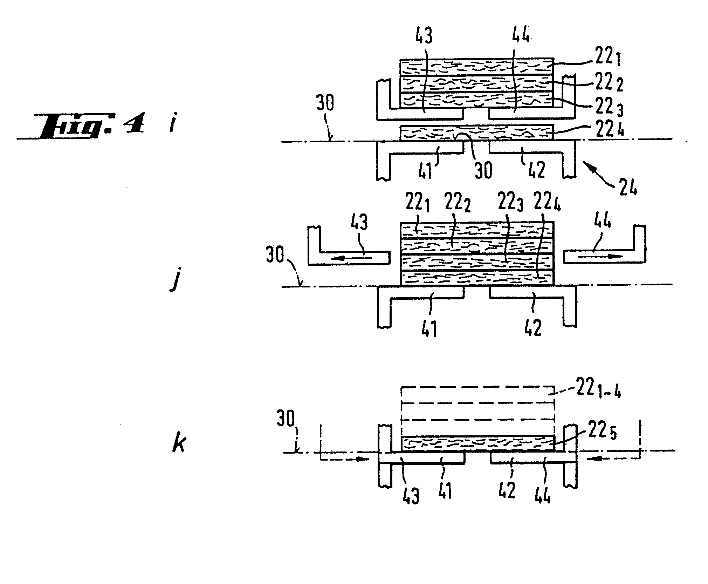

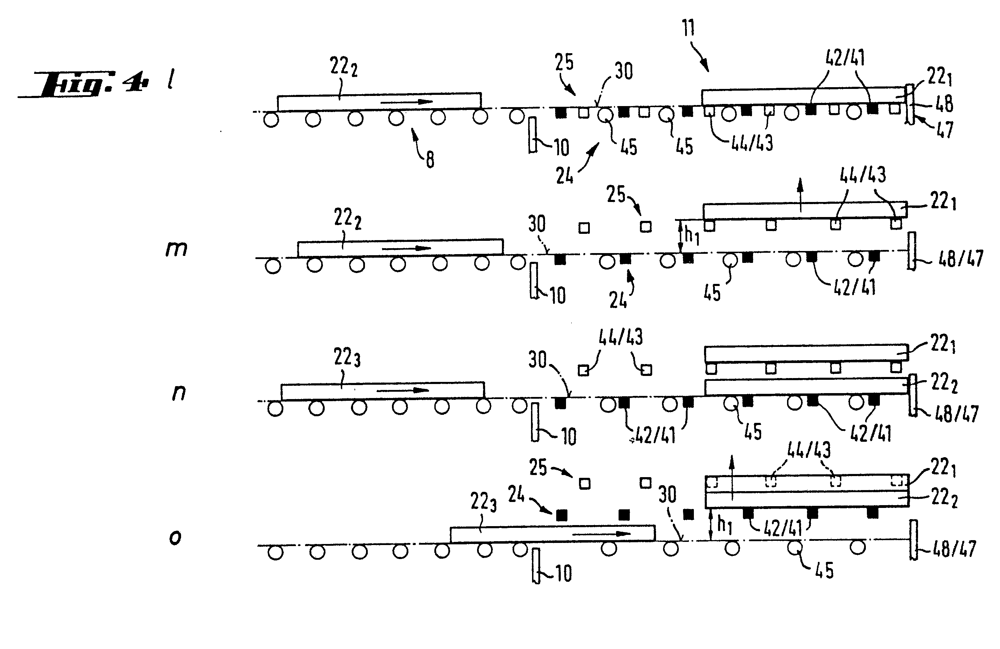

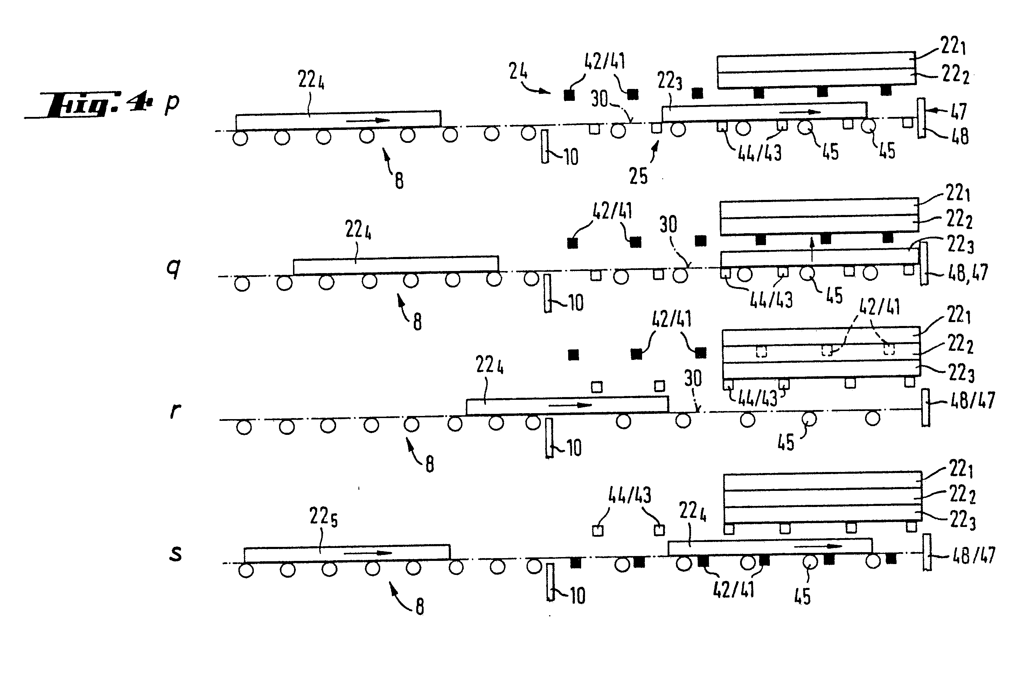

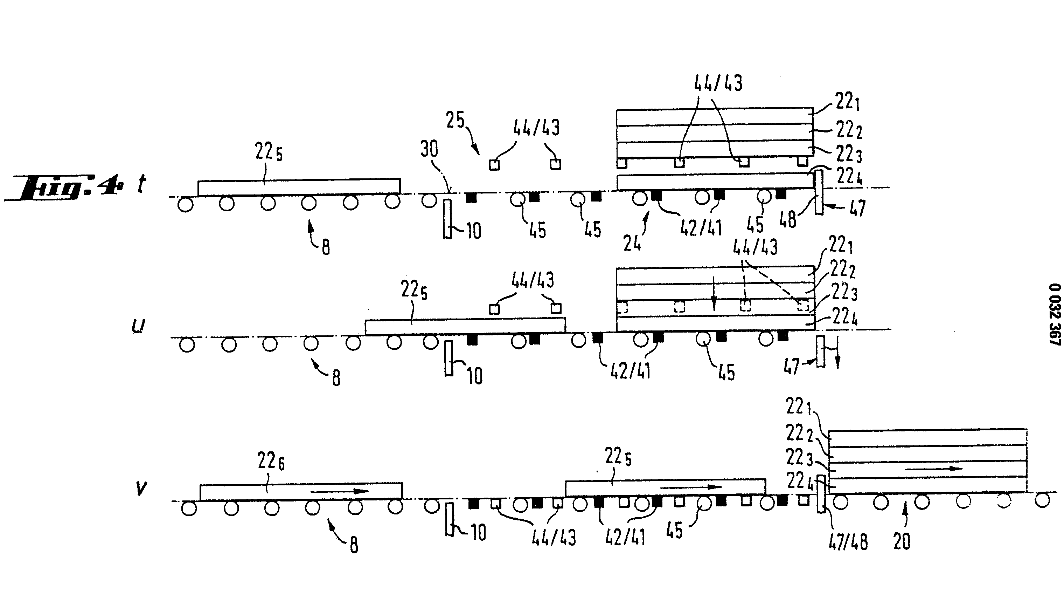

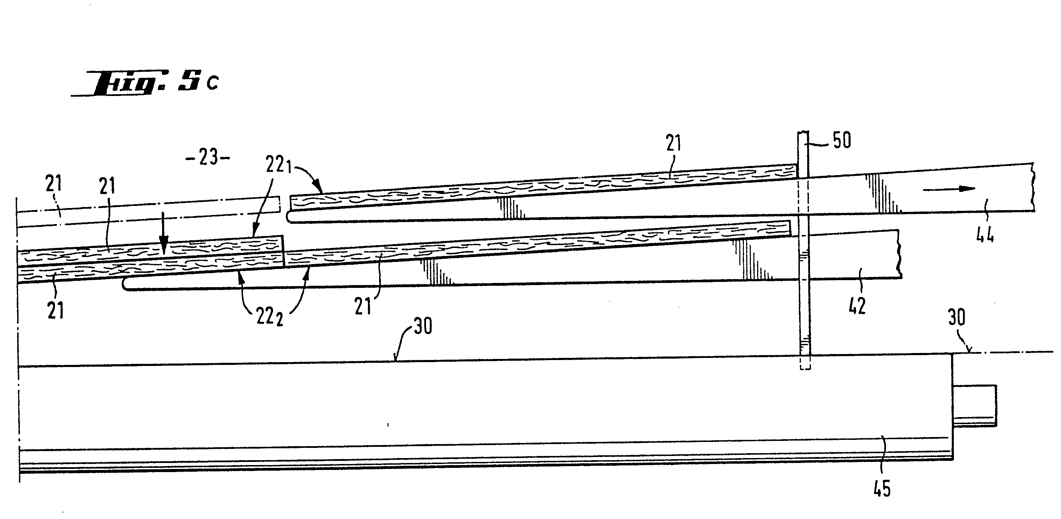

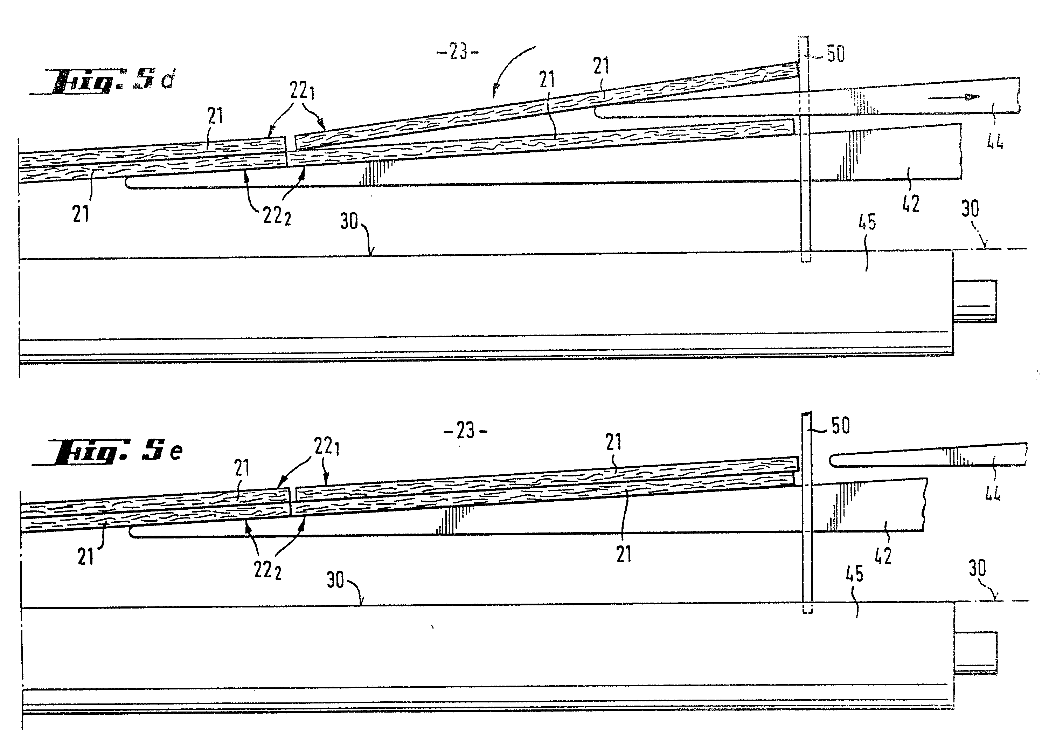

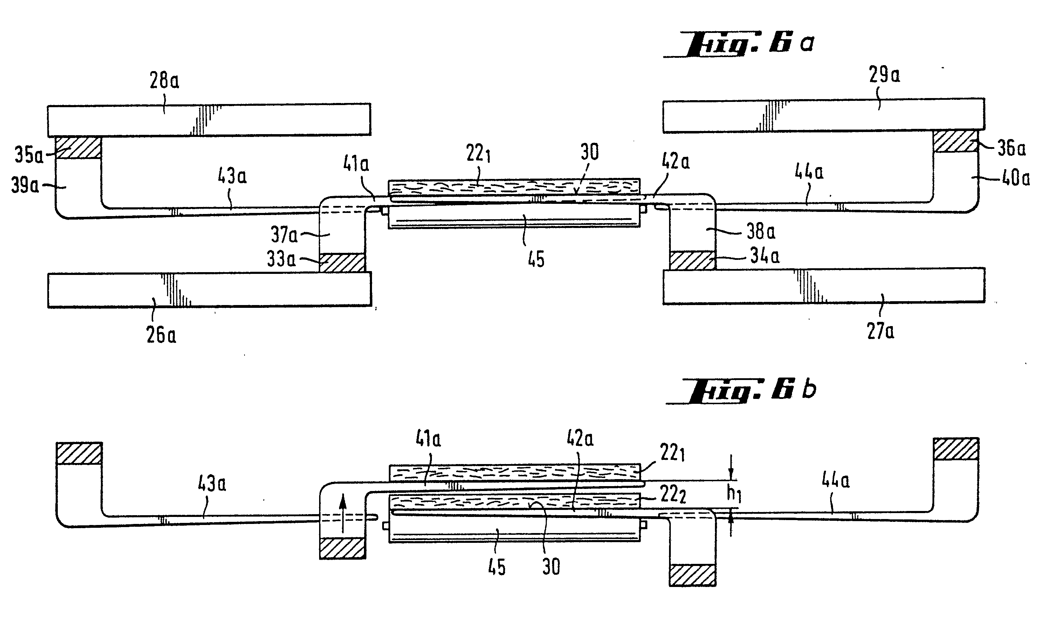

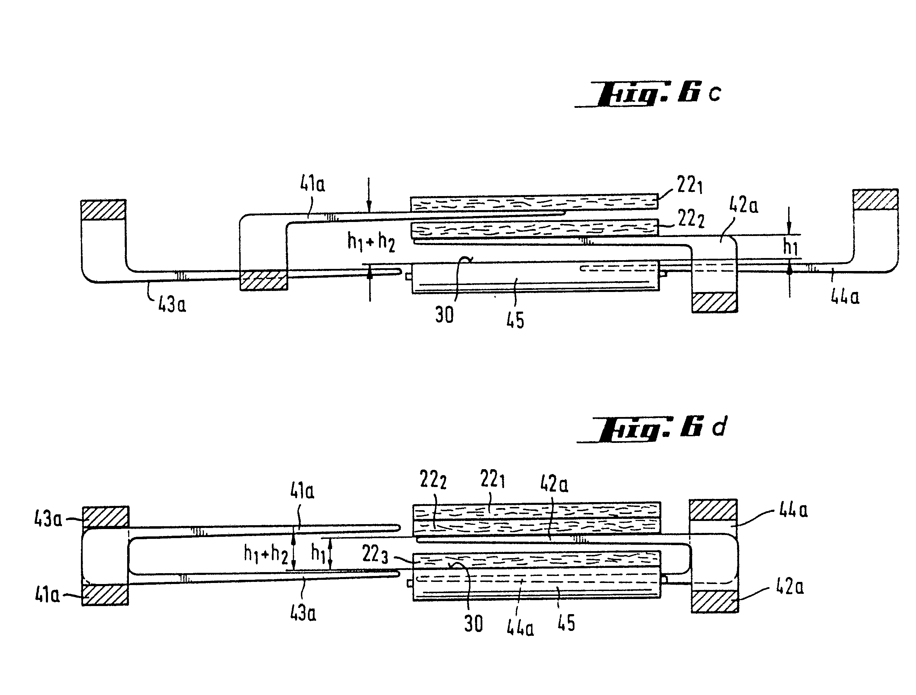

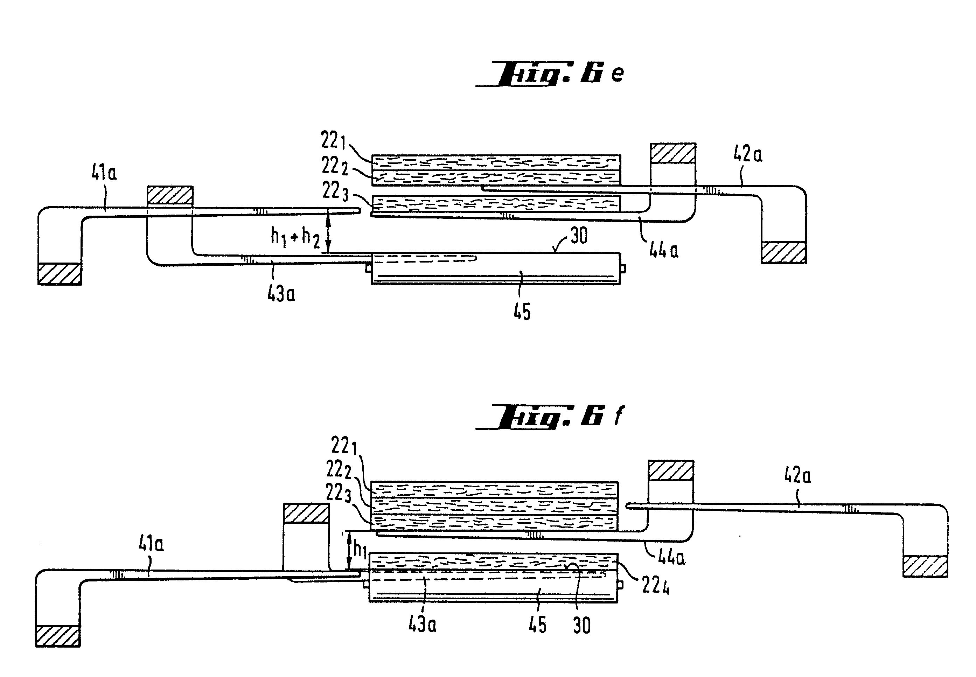

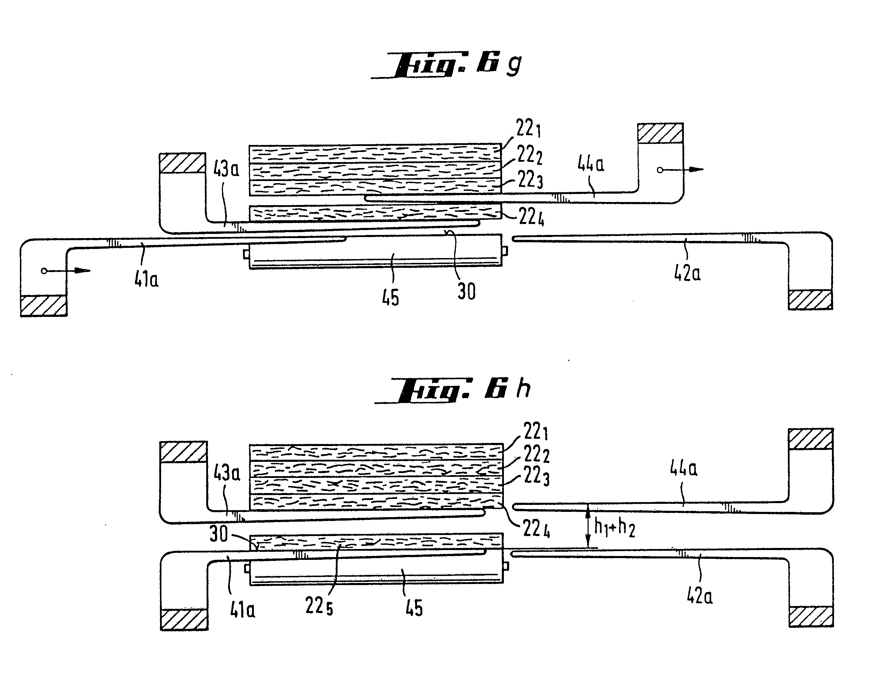

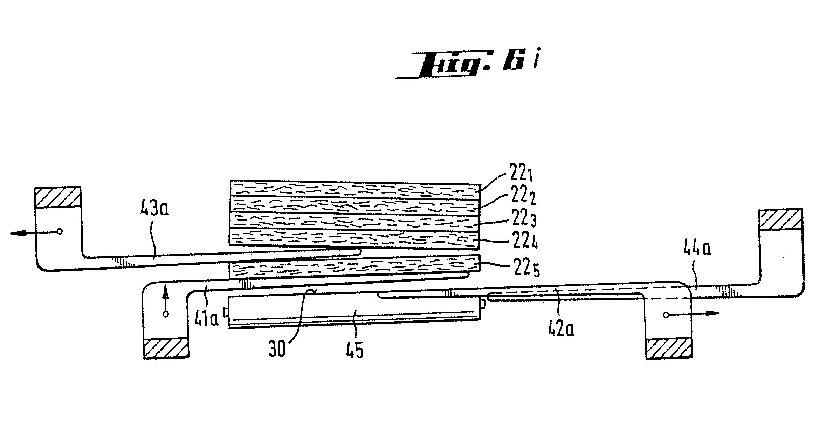

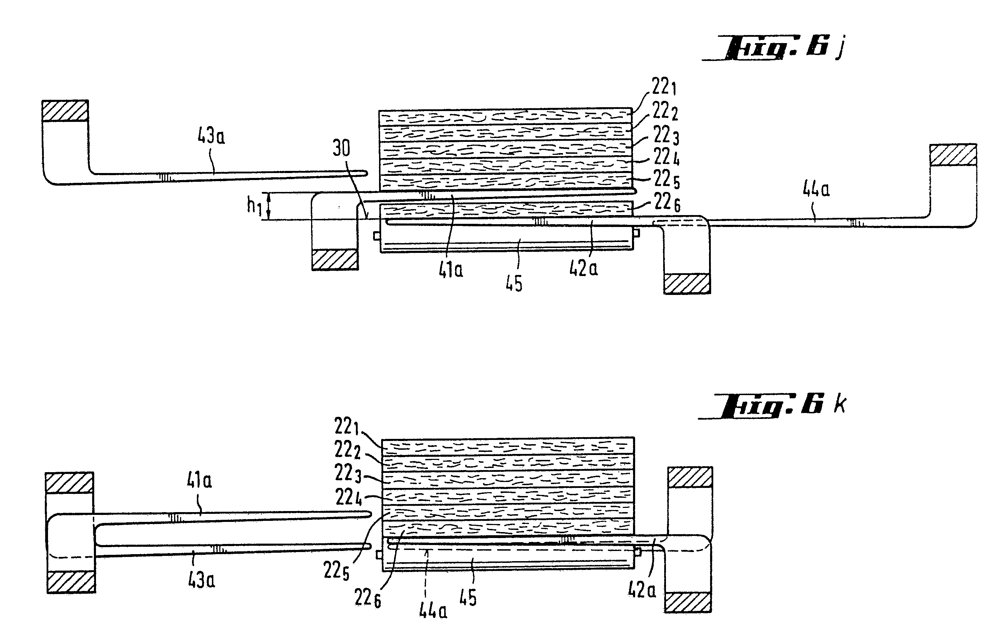

In Fig. 3, welche, ebenso wie die folgenden Fig. 4 und 6 nur die zum Verständnis der Arbeitsweise erforderlichen Bauteile der Stapelvorrichtung 11 in schematisch noch weitergehender Vereinfachung zeigt, ist eine mögliche Arbeitsweise der Stapelvorrichtung 11 gemäß Fig. 2 näher veranschaulicht. Fig. 3a veranschaulicht dabei einen Moment im Zuge des Stapelvorganges, der bereits zur Bildung eines Teilstapels von zwei Lagen 22 geführt hat, und in dem die Abstützelemente 41 und 42 der unteren Hebeeinrichtung 24 unter die Stapelstützfläche 30 eingefahren sind und bereit sind, den aus den beiden Lagen 22 bestehenden Teilstapel anzuheben, während die Abstützelemente 43 und 44 soeben zwischen den beiden Lagen 22 des Teilstapels ausgefahren sind.

Zur Vorbereitung eines Einlaufs der folgenden Lage 22 heben die Abstützelemente 41 und 42 sodann den Teilstapel aus den beiden Lagen 22 in die Stellung gemäß Fig. 3b an, in der die neue Lage 22 bereits als auf die Stapelstützfläche 30 eingefahren ist.

Die Einfahrbewegung der neuen Lage 22 wird durch den Stauanschlag 47 beendet, so daß die neue Lage 22 registerhaltig mit dem angehobenen Teilstapel auf der Stapelstützfläche 30 aufliegt. Parallel hierzu sind die Abstützelemente 43 und 44 der Hebeeinrichtung 25 nach unten in eine Ebene unterhalb der Stapelstützfläche 30 gefahren, wobei sie in der aus Fig. 3b klar ersichtlichen Weise die Ebene der Abstützelemente 41 und 42 der Hebeeinrichtung 24 durchdringen und unterhalb der Ebene der Abstützelemente 41 und 42 zur Ruhe kommen. Die gegenseitige Durchdringung der Abstützelemente 41 und 42 sowie 43 und 44 wird durch die Abstandshalter 37, 38 und 39, 40 ermöglicht, wie dies weiter oben im Zusammenhang mit Fig. 2 bereits näher erläutert wurde, sowie dadurch, daß die Abstützelemente 41, 42 einerseits und 43, 44 andererseits in Produktionsrichtung gemäß Pfeil 1 gegeneinander versetzt angeordnet sind, also gewissermaßen auf Lücke stehen und daher bei der gegenseitigen Durchdringung in Vertikalrichtung nicht kollidieren.

Wenn die neue Lage 22 gemäß Fig. 3b voll auf die Stapelstützfläche 30 aufgefahren ist, so werden durch Betätigung der Schlitten 33 und 34 die Abstützelemente 41 und 42 der unteren Hebeeinrichtung 24 gemäß Fig. 3c aus dem Spalt zwischen der neuen Lage 22 und dem zuvor gebildeten Teilstapel ausgefahren, gegebenenfalls nach einer vorherigen geringfügigen Absenkbewegung zur Annäherung der Unterseite des Teilstapels an die Oberseite der neuen Lage 22, so daß der Teilstapel sanft auf die auf der Stapelstützfläche 30 liegende neue Lage 22 abgesetzt wird. Gleichzeitig mit der Ausfahrbewegung der Abstützelemente 41 und 42 der Hebeeinrichtung 24 fahren die Abstützelemente 43 und 44 der Hebeeinrichtung 25 unter die Stapelstützfläche 30 ein und stehen nunmehr ihrerseits bereit, den aus den drei Lagen 22 gebildeten Teilstapel gemäß Fig. 3c anzuheben.

In Fig. 3d ist die Stellung der Abstützelemente 43 und 44 am Ende dieser Hubbewegung dargestellt, wobei eine weitere Lage 22 als auf die Stapelstützfläche 30 bereits eingefahren veranschaulicht ist. Gleichzeitig mit der Hubbewegung der Hebeeinrichtung 25 erfolgt die Absenkung der Hebeeinrichtung 24 in die Stellung gemäß Fig. 3d, wo die Abstützelemente 41 und 42 der Hebeeinrichtung 24 bereitstehen, unter die Stapelstützfläche 30 in die Stellung gemäß Fig. 3a einzufahren, wenn die Abstützelemente 43 und 44 der Hebeeinrichtung 25 wieder in die Stellung gemäß Fig. 3a ausfahren. Im Anschluß an die geschilderte Ein- und Ausfahrbewegung der Abstützelemente 41, 42 bzw. 43, 44 ergibt sich ausgehend von der Arbeitsstellung gemäß Fig. 3d wieder die Arbeitsstellung gemäß Fig. 3a, jedoch mit dem Unterschied, daß nunmehr vier Lagen 22 auf der Stapelstützfläche 30 anstelle der beiden Lagen 22 gemäß Fig. 3a abgesetzt sind, und nunmehr die vier Lagen 22 angehoben werden können, um ein Einfahren einer fünften Lage auf die Stapelstützfläche 30 zu ermöglichen.

Die Steuerung der Abstützelemente 41, 42 und 43, 44 kann in der aus den Fig. 3a bis 3d ersichtlichen Weise so erfolgen, daß stets eine gegenläufige Ein- und Ausfahrbewegung bzw. Hubbewegung gleichzeitig erfolgt, so daß durch eine genaue antizyklische Arbeitsweise der Abstützelemente 41, 42 bzw. 43, 44 kaum Zeitverluste entstehen, hingegen der wesentliche Vorteil erreicht wird, daß ein Massenausgleich zwischen den bewegten Teilen erfolgt, so daß außerordentlich kurze Taktzeiten erzielt werden können. Darüber hinaus vereinfacht sich natürlich die Steuerung, so daß beispielsweise die Hubtische 26, 27 und 28, 29 zwangläufig etwa über Zahnstangen und Zahnräder getriebeverbunden sein können.

Die in Fig. 3 veranschaulichte Arbeitsweise der Stapelvorrichtung 11 besitzt jedoch den Nachteil, daß nach dem Einfahren einer neuen Lage 22 auf die Stapelstützfläche 30 zunächst der zuvor gebildete Teilstapel durch seitliches Ausfahren der entsprechenden Abstützelemente auf die Oberseite der neuen Lage 22 abgesetzt werden muß und erst anschließend die neue Lage 22 zusammen mit dem darauf abgesetzten zuvor gebildeten Teilstapel angehoben werden kann, bevor eine neue Lage 22 auf die Stapelstützfläche 30 einlaufen kann. Gerade diejenige Zeitspanne aber, in der eine neu eingelaufene Lage 22, abgestoppt durch den hinteren Stauanschlag 47, auf der Stapelstützfläche 30 liegt, bevor der Hub erfolgt, ist insofern kristisch, als sich danach der erforderliche Minimalabstand zwischen der rückwärtigen Kante der soeben eingelaufenen Lage 22 zur Vorderkante der nachfolgenden Lage 22 auf dem Stauband 8 bemißt, da diese beiden Kanten der aufeinanderfolgenden Lagen 22 ja nicht kollidieren dürfen. Da jede Lage 22 in aller Regel mindestens eine der Hälfte der Länge der Stapelstützfläche 30 entsprechende Länge besitzt, benötigt diese für ihren Einlauf zum Erreichen der hinteren Staubolzen 48 noch eine nicht unbeträchtliche Zeit von etwa 2 s bei der Anwendungsform gemäß Fig. 1, und während dieser Zeit müssen die den Teilstapel anhebenden Abstützelemente in dieser Stellung verbleiben, bevor die Ablage des oberen Teilstapels auf die registerhaltig abgestoppte und ruhende neue Lage 22 erfolgen kann. Während der Zeitbedarf für die eigentliche Hubbewegung zwischen den Fig. 3a und 3b oder 3c und 3d nur etwa 0,2 s betragen mag, muß die Stapelvorrichtung 11 somit etwa 2 Sekunden in der in den Fig. 3b oder 3c erreichten Stellung stehenbleiben, um den vollständigen Einlauf der unteren Lage 22 abzuwarten, bevor die den Teilstapel unterstützenden Abstützelemente seitlich aus diesem ausfahren und den Teilstapel auf der neuen Lage 22 ablegen können.

In Form der nachfolgend anhand von Fig. 4 erläuterten Arbeitsweise der Vorrichtung gemäß Fig. 2 ist eine Lösung gefunden, bei der der erforderliche zeitliche Minimalabstand zwischen der rückwärtigen Kante einer vorlaufenden Lage 22 und der Vorderkante einer nachlaufenden Lage 22 im wesentlichen auf denjenigen Zeitbedarf begrenzt ist, der tatsächlich alleine zur Durchführung der Hubbewegung einer auf die Stapelstützfläche 30 aufgelaufenen und am hinteren Stauanschlag 47 abgestoppten Lage 22 benötigt wird.

Zur Verdeutlichung ist in Fig. 4a zunächst ein Ausgangszustand dargestellt, bei dem beide Hebeeinrichtungen 24 und 25 in ihrer abgesenkten Stellung derart stehen, daß sämtliche Abstütztelemente 41, 42, 43 und 44 unterhalb der Stapelstützfläche 30 liegen und zu einem Hub bereit sind. Wie Fig. 41 hierzu in einer anderen Ansicht veranschaulicht, ist soeben eine erste, auf die Stapelstützfläche 30 eingelaufene Lage $22_1$ durch die Staubolzen 48 des Stauanschlags 47 abgestoppt worden. Wie ebenfalls Fig. 41 veranschaulicht, ist die nachlaufende, zweite Lage $22_2$ bereits kurz vor dem Stauanschlag 10 der Staubahn 8 angelangt und steht also zum Einlauf auf die Stapelstützfläche 30 bereit. Zur Vereinfachung sei beim vorliegenden Beispiel angenommen, daß einstückige Plattenlängen als Lagen 22 gestapelt werden, so daß keine Betätigung des Stauanschlags 10 zur Bildung einer Plattenformation aus einer Mehrzahl hintereinander angestauter Mineralfaserplatten 21 erforderlich ist.

Aus der Stellung gemäß Fig. 4a wird nun zunächst die Hebeeinrichtung 25 mit den Hubtischen 28 und 29 derart betätigt, daß die Abstützelemente 43 und 44 unter Durchdringung der Stapelstützfläche 30 um eine Höhe $h_1$ (Fig. 4b; m) nach oben fahren, derart, daß die neue Lage $22_2$ auf die Stapelstützfläche 30 einfahren kann. Wie ein Vergleich der Stellungen der Lage $22_2$ in den zugehörigen Fig. 4l und 4m veranschaulicht, ist die Lage $22_2$ während dieser kurzen Hubbewegung, die beispielsweise 0,2 s dauern kann, nur ein ganz geringes Stück auf die Stapelvorrichtung 11 zu bewegt worden. Die Höhe $h_1$ entspricht der Summe aus der Dicke jeder Lage 22, einem Sicherheitsabstand von beispielsweise 20 mm für den Einlauf der Lage $22_2$ zwischen der Unterkante der Abstützelemente 41, 42, 43 oder 44 und der Oberkante der Lage $22_2$ auf der Stapelstützfläche 30, zuzüglich der maximalen vertikalen Dicke der Abstützelemente 41, 42, 43 oder 44 im Bereich der Breite der Lage $22_2$, und zuzüglich eines Sicherheitsabstandes von beispielsweise 5 mm zwischen der Unterkante der Lage 22 auf der Stapelstützfläche 30 zur nächstliegenden, im Bereich der Breite der Lagen 22 angeordneten Oberkante der Abstützelemente 41, 42, 43 oder 44.

Nach dem Anheben der Lage $22_1$ gemäß Fig. 4b und 4m durch die Hebbewegung der Abstützelemente 43 und 44 um die Höhe $h_1$ ist die Stapelstützfläche 30 frei für den Einlauf der zweiten Lage $22_2$, wie dies aus den Fig. 4c und 4n ersichtlich ist. Sobald die Lage $22_2$ den Stauanschlag 47 erreicht hat, heben die Abstützelemente 41 und 42 der Hebeeinrichtung 24 die Lage $22_2$ von der Stapelstützfläche 30 ab und um die Höhe $h_1$ an. Gleichzeitig wird, wie aus Fig. 4d und 4o ersichtlich ist, die Lage $22_1$ mittels der Abstützelemente 43 und 44 um eine zusätzliche Höhe $h_2$ angehoben, die im Betrag der Höhe $h_1$ entsprechen oder aber auch etwas kleiner sein kann. Gleichzeitig mit dem weiteren Anheben der Lage $22_1$ beginnt die Auswärtsbewegung der Abstützelemente 43 und 44 aus dem Spalt zwischen den Lagen $22_1$ und $22_2$, so daß sich im Verein mit der für die nach oben nachrückende Lage $22_2$ Platz schaffenden Hubbewegung der Abstützelemente 43 und 44 um die Höhe $h_2$ ein weiches Ablegen der Lage $22_1$ auf die Lage $22_2$ ergibt, während diese in der um die Höhe $h_1$ angehobenen Stellung, die ein Einfahren der folgenden Lage $22_2$ ermöglicht, verbleibt.

Wie aus den Fig. 4e und 4p ersichtlich ist, kann nunmehr die bereits angelieferte Lage $22_3$ in den Bereich unter den angehobenen Abstützelementen 41 und 42 auf die Stapelstützfläche 30 auflaufen und wird ihrerseits vom Stauanschlag 47 abgestoppt. Während des Einlaufs der Lage $22_3$ wird die Hebeeinrichtung 25 mit den Abstützelementen 43 und 44 um die Summe der Höhe $h_1$ und $h_2$ abgesenkt und werden die Abstützelemente 43 und 44 mittels der Schlitten 35 und 36 aufeinander zu unter die Stapelstützfläche 30 in die Stellung gemäß den Fig. 4e und 4p eingefahren, so daß diese für eine erneute Hubbewegung zur Verfügung stehen. Diese Bewegung der Abstützelemente 43, 44 nach unten und einwärts aus der Stellung gemäß Fig. 4d in die Stellung gemäß Fig. 4e benötigt beispielsweise eine Zeitspanne von knapp 2 s, was der Größenordnung der Zeitspanne entspricht, welche die Vorderkante der Lage $22_3$ benötigt, um vom vorderen Ende der Stapelstützfläche 30 aus zum Stauanschlag 47 zu gelangen. In dieser Zeit rückt die folgende Lage $22_4$ in der aus Fig. 4p ersichtlichen Weise mit gleicher Geschwindigkeit nach und steht somit dann, wenn die Lage $22_3$ den Stauanschlag 47 erreicht, mit ihrer Vorderkante bereits kurz vor dem Beginn der Stapelstützfläche 30, wie die Fig. 4f und 4q veranschaulichen. In der Regel haben die Abstützelemente 43 und 44 ihre Wartestellung für den nächsten Hub bereits erreicht, bevor die einlaufende Lage $22_3$ den Stauanschlag 47 erreicht hat, etwa in deren Stellung gemäß Fig. 4p.

Wenn die neue Lage $22_3$ den Stauanschlag 47 gemäß den Fig. 4f und 4q erreicht hat, so erfolgt wiederum eine Hubbewegung der Abstützelemente 43 und 44 der Hebeeinrichtung 25 um die Höhe $h_1$ und eine gleichzeitige Hubbewegung um die Höhe $h_2$ mit gleichzeitiger Auswärtsbewegung der Abstützelemente 41, 42. Diese Stellung ist in der Fig. 4g und 4r veranschaulicht, wobei unmittelbar nach abgeschlossener Hubbewegung der Abstützelemente 43 und 44 die Stapelstützfläche 30 frei ist für den Einlauf der folgenden Lage $22_4$, unabhängig davon, ob die Abstützelemente 41 und 42 bereits voll ausgefahren sind oder nicht. Infolge des größeren Weges dauert die Ein- und Ausfahrbewegung der Abstützelemente in der Regel erheblich länger, beispielsweise 1,5 s, als die Hubbewegung um die Höhe $h_1$ oder $h_2$, die in einer Größenordnung von 0,2 s abgeschlossen sein kann. Daher kann nach Abschluß der Hubbewegung der Abstützelemente 43 und 44 um die Höhe $h_1$ und der parallelen Hubbewegung der Abstützelemente 41 und 42 um die Höhe $h_2$ die Ausfahrbewegung der Abstützelemente 41 und 42 abgeschlossen werden, während die Vorderkante der nachlaufen-

den Lage $22_4$ bereits in den Bereich der Stapelstützfläche 30 gelangt.

Die Fig. 4h und 4s veranschaulichen die erfolgte Abwärtsbewegung der in der obersten Stellung stehenden Abstützelemente, im vorliegenden Fall der Abstützelemente 41 und 42, unter die Ebene der Stapelstützfläche 30 und das Einfahren der Abstützelemente 41 und 42 in Bereitschaft für den nächsten Hub, während die Lage $22_4$ auf der Stapelstützfläche 30 sich noch in Richtung auf den hinteren Stauanschlag 47 bewegt. Gemäß den Fig. 4i und 4t sind beim Erreichen des Stauanschlages 47 durch die Lage $22_4$ die unteren Abstützelemente 41 und 42 längst in ihrer Bereitschaftstellung für den nächsten Hub angelangt und können die abgestoppte Lage $22_4$ bei Bedarf sofort erneut anheben, um der folgenden Lage $22_5$ Platz zu machen.

Im vorliegenden Fall sei jedoch angenommen, daß lediglich vier Lagen 22 für einen Stapel abgestapelt werden sollen. Dann bleiben die abgesenkten Abstützelemente 41 und 42 in der Stellung gemäß Fig. 4i und Fig. 4t stehen, und es fahren nur, gegebenenfalls nach einer leichten Absenkbewegung, die Abstützelemente 43 und 44 seitlich aus dem Spalt zwischen den Lagen $22_3$ und $22_4$ aus, so daß der zuvor gebildete Teilstapel aus drei Lagen 22 auf der auf der Stapelstützfläche 30 ruhenden Lage $22_4$ abgesetzt wird. Damit steht in der aus den Fig. 4j und 4u ersichtlichen Weise der fertige Stapel aus vier Lagen 22 auf der Stapelstützfläche 30 und wird der Stauanschlag 47, wie aus Fig. 4u ersichtlich ist, abgesenkt. Die angetriebenen Rollen 45 beschleunigen dann den Stapel über dessen unterste Lage $22_4$ über das hintere Ende der Stapelstützfläche hinaus, auf die parallel hierzu bereits die nächste Lage $22_5$ einfährt (Fig. 4v). Da zwischen dem Anschlag der Lage $22_4$ am Stauanschlag 47 und dessen Absenkung zum Ausfahren des gebildeten Stapels lediglich das seitliche Herausfahren der Abstützelemente 43 und 44 erforderlich ist, bleibt die neue Lage $22_5$ noch in einem Abstand hinter dem auslaufenden Stapel, der ein erneutes Hochfahren der Staubolzen 48 hinter dem ausgefahrenen Stapel ermöglicht, um die Platte $22_5$ anstelle der Platte $22_1$ gemäß Fig. 4a und 4l als neue erste Lage eines weiteren Stapels einzusetzen. Während des Auslaufs des Stapels von der Stapelstützfläche 30 bleibt weiterhin genügend Zeit für die seitlich ausgefahrenen Abstützelemente 43 und 44, die Absenk- und Einfahrbewegung auszuführen, so daß die Hubtische 26, 27 und 28, 29 sowie die Schlitten 33, 34 und 35, 36 mit den Abstützelementen 41, 42, 43 und 44 wieder die Ausgangsstellung gemäß Fig. 4a erreicht haben, wenn die Lage $22_5$ an den erneut hochgefahrenen Staubolzen 48 anschlägt. Sodann wiederholt sich der in Fig. 4 für die Lagen $22_1$ bis $22_4$ veranschaulichte Zyklus für die Lagen $22_5$ bis $22_8$.

Bei der Arbeitsweise gemäß Fig. 4 wird somit die Stapelstützfläche 30 nach Einlauf einer Lage 22 auf schnellstmögliche Weise, nämlich durch sofortigem Hub der abgestoppten Lage 22 um die Höhe $h_1$ für die nächstfolgende Lage 22 freigemacht, während diejenige Zeit, die die nächstfolgende Lage 22 benötigt, um vom Beginn der Stapelstützfläche 30 aus den hinteren Stauanschlag 47 zu erreichen, dazu genutzt wird, das andere Paar der Abstützelemente 41, 42 oder 43, 44, welches nicht zur Abstützung der soeben angehobenen Lage 22 benötigt wird, in die Bereitschaftstellung für den Hub der neuen Lage 22 unter die Stapelstützfläche 30 einzufahren. Damit wird die unvermeidliche Zeit, die jede Lage 22 zum Einfahren benötigt, und in der wegen der Bewegung der einfahrenden Lage 22 deren Hub nicht erfolgen kann, optimal genutzt, während diese Zeit bei der Ausführungsform gemäß Fig. 3 als Totzeit anzusehen ist.

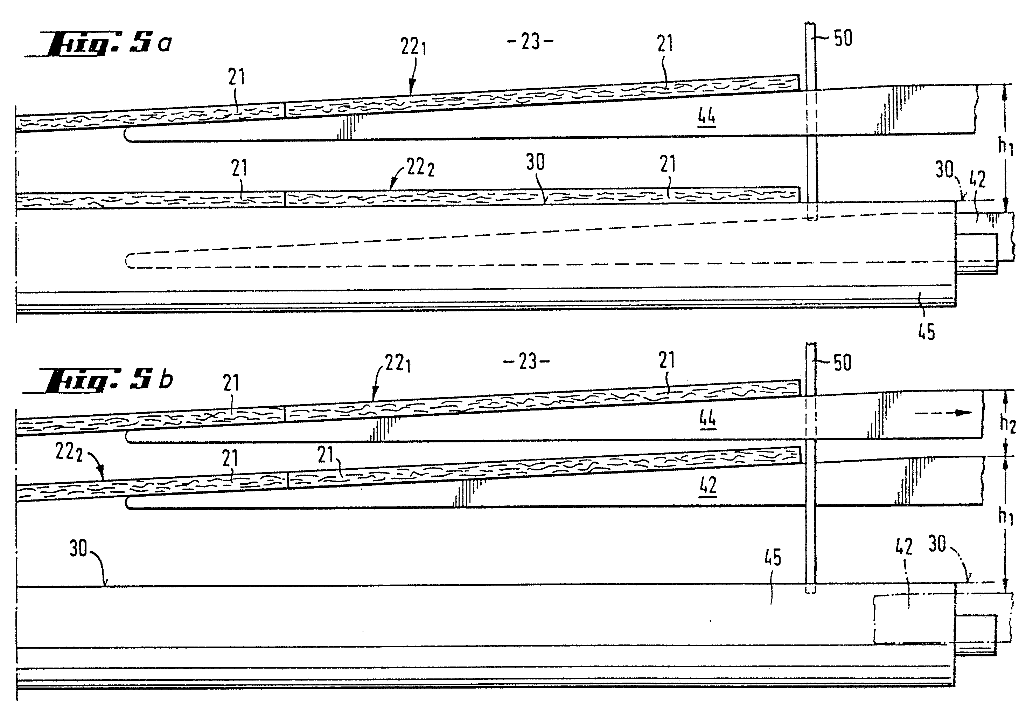

Anhand der Darstellung in Fig. 5 wird nachstehend näher erläutert, wie die Ablage einer Lage 22 auf einer angehobenen, nachfolgenden Lage 22 im einzelnen bewirkt wird, wobei die Zusammenführung der Lagen $22_1$ und $22_2$ gemäß den Fig. 4c und 4d, und entsprechend natürlich den Fig. 4n und 4o, als Beispiel gewählt ist, und die rechte Hälfte der schematischen Ansichten in Fig. 4c und 4d gemäß dortigem strichpunktierten Kreis Va und Ve in Fig. 5 vergrößert mit weiteren Einzelheiten dargestellt. Dabei entspricht Fig. 5a der Ausgangsstellung für die Zusammenführung gemäß Fig. 4c und entspricht Fig. 5e der fertigen Ablage der Lage $22_1$ auf der Lage $22_2$ gemäß Fig. 4d.

Im Beispielsfalle der Fig. 5 sei angenommen, daß jede Lage 22 aus drei nebeneinanderliegenden Mineralfaserplatten 21 bestehen möge, die je über ein Drittel der Breite der Lage 22 reichen. Wie aus Fig. 5a ersichtlich ist, sind die Abstützelemente 42 und 44 so ausgebildet, daß sie in voll eingefahrenem Zustand bis in einen Bereich der mittleren Mineralfaserplatte 21 reichen, der eine ausreichende Unterstützung bei der Hubbewegung ergibt. Die Abstützelemente 41, 42, 43 und 44 sind in Richtung auf ihre einander benachbarten freien Enden hin verjüngt ausgebildet, wobei die Unterkante im wesentlichen horizontal liegt, so daß die Oberkante der Abstützelemente 41, 42, 43 und 44 von außen zur Mitte der Stapelstützfläche 30 hin leicht abfällt. Dabei steht in der Darstellung gemäß Fig. 5a das obere Abstützelement 44 in der Höhe $h_1$ über der Oberkante des unteren Abstützelementes 42, jeweils von Oberkante zu Oberkante der Abstützelemente 42 und 44 im nicht verjüngten, seitlich äußeren Bereich gemessen. Die Ausbildung auf der anderen, gemäß Fig. 5 linken Seite der Stapelvorrichtung 11 ist selbstverständlich völlig symmetrisch.

Gemäß Fig. 5b hebt nun zunächst das untere Abstützelemente 42 die neu auf die Stapelstützfläche 30 eingelaufene Lage $22_2$ um die Höhe $h_1$ an, während das obere Abstützelement 44 mit der darauf abgestützten Lage $22_1$ um die geringere Höhe $h_2$ nach oben ausweicht. Die Hubhöhe $h_1$ kann dabei beispielsweise 90 mm betragen, während die Hubhöhe $h_2$ nur 50 mm beträgt. Auf diese Weise werden im Zuge der gemeinsamen Hubbewegung der Abstützelemente 42 und 44 die Lagen $22_1$ und $22_2$ einander bereits so weit als möglich angenähert. Dabei kann bereits die seitliche Auswärtsbewegung des Abstützelementes 44 einsetzen, jedoch ist dies nicht unbedingt erforderlich, da die Hubbewegung nur sehr geringen Zeitbedarf von beispielsweise 0,2 s besitzt, der gegenüber dem Zeitbedarf von beispielsweise 1,5 s für die Ausfahrbewegung relativ gering ist, so daß die für den Hub benötigte Zeit nicht immer unbedingt für die Einleitung auch der Ausrückbewegung genutzt werden muß.

Die Ausrückbewegung setzt jedoch jedenfalls im Anschluß an die Hubbewegung in die Stellung gemäß Fig. 5b ein, und ist in den Fig. 5c, d und e näher veranschaulicht. Bei der Ausfahrbewegung gibt die Spitze des Abstützelementes 44 zunächst die seitlich äußere Kante der mittleren Mineralfaserplatte 21 der Lage $22_1$ frei, so daß diese auf die entsprechende Mineralfaserplatte 21 der unteren Lage $22_2$ herabfallen kann. Dabei wird die seitlich äußere Mineralfaserplatte 21 der Lage $22_1$ durch einen seitlichen Anschlag 50 festgehalten, um eine Mitnahme durch Reibung am Abstützelement 44 mit Sicherheit zu vermeiden.

Im Zuge der weiteren Ausrückbewegung des Abstützelementes 44 gelangt dieses nach außen über die Längs-Schwerlinie der Mineralfaserplatte 21 hinaus, so daß diese gemäß der Darstellung in Fig. 5d innen nach unten kippt und mit ihrer Innenkante auf der entsprechenden Mineralfaserplatte 21 der unteren Lage $22_2$ zu liegen kommt. Bei den veranschaulichten, sehr dünnen Mineralfaserplatten 21 besteht dabei die Besorgnis, daß etwa durch Zurückfedern am Anschlag 50 die Innenkante der seitlich äußeren Mineralfaserplatte 21 der Lage $22_1$ über die Außenkante der mittleren Mineralfaserplatte 21 der Lage $22_1$ gelangen könnte, so daß diese beiden Mineralfaserplatten 21 mit ihren Rändern im Stapel übereinander zu liegen kämen. Dieser Gefahr wird jedoch dadurch begegnet, daß auf Grund der verjüngten Ausbildung des Abstützelementes 42 (wie natürlich auch der anderen Abstützelemente) die innere Spitze des Abstützelementes 44 in einem deutlichen Abstand über dem inneren darunterliegenden Flächenbereich der Lage $22_2$ zu liegen kommt, so daß die seitlich äußere obere Mineralfaserplatte 21 gemäß Fig. 5d ausgeprägt abkippt. Dadurch, daß die Mineralfaserplatte 21 auch im Zuge der Kippbewegung noch durch Reibung vom Abstützelement 44 her gegen den Anschlag 50 gezogen wird, gelangt die seitlich äußere Mineralfaserplatte 21 in die Lage gemäß Fig. 5d, in der sie mit ihrem äußeren Rand gewissermaßen hochgestellt und von der mittleren Mineralfaserplatte 21 weggezogen wird. Auch bei engen Toleranzen wird auf diese Weise ein Spalt zwischen den benachbarten Rändern der dargestellten Mineralfaserplatten 21 der Lage $22_1$ geschaffen, der die Sicherheit gewährleistet, daß der innere Rand der äußeren Mineralfaserplatte 21 neben den äußeren Rand der mittleren Mineralfaserplatte 21 fällt und nicht auf diesem zu liegen kommt, selbst wenn durch geringe Höhe oder Dicke der Lage $22_2$ ein solches Übergleiten der Ränder der Mineralfaserplatten 21 denkbar wäre.

In der Darstellung gemäß Fig. 5e ist das Abstützelement 44 in der auch aus Fig. 4d ersichtlichen Weise seitlich vollständig aus dem Stapelraum 23 herausgezogen, der seitlich durch die Anschläge 50 begrenzt wird. Durch auftretende Erschütterungen kann nun die seitlich äußere Mineralfaserplatte 21 in bündige Anlage an die mittlere Mineralfaserplatte 21 gelangen, oder aber auch in Gleitkontakt mit dem Anschlag 50 verbleiben.

In Fig. 6 ist eine im Prinzip der Fig. 4 entsprechende Arbeitsweise einer gegenüber der Ausbildungsform gemäß Fig. 2 abgewandelten Ausführungsform einer erfindungsgemäßen Stapelvorrichtung veranschaulicht. Bei der Ausführungsform gemäß Fig. 6 sind vier Hebeeinrichtungen 26a, 27a, 28a und 29a in Form von Hubtischen ähnlich den Hubtischen 26, 27, 28 und 29 gemäß Fig. 2 vorgesehen, jedoch bilden diese Hubtische jeweils eigene Hebeeinrichtungen 26a, 27a, 28a und 29a, da sie unabhängig voneinander auf- und abwärts beweglich sind. An der Oberseite der Hubtische der unteren Hebeeinrichtungen 26a und 27a sind wiederum Schlitten 33a und 34a mit vertikalen Abstandshaltern 37a und 38a gelagert, an denen gabelförmige Abstützelemente 41a und 42a befestigt sind. Entsprechend sind an den Hubtischen der oberen Hebeeinrichtungen 28a und 29a Schlitten 35a und 36a verfahrbar, an denen über vertikale Abstandshalter 39a und 40a im Abstand unterhalb der Hubtische und der Schlitten 35a und 36a gabelförmige Abstützelemente 43a und 44a befestigt sind. Die Abstützelemente 41a, 42a, 43a und 44a erstrecken sich ebenso wie die Abstützelemente 41, 42, 43 und 44 in horizontaler Richtung von jedem der zugehörigen Schlitten 33a, 34a, 35a und 36a aus in Richtung auf die Stapelstützfläche 30, während jedoch die Abstützelemente 41, 42, 43 und 44 allenfalls knapp über die halbe Breite der Stapelstützfläche 30 reichen und so paarweise die Lagen 22 untergreifen, weisen die Abstützelemente 41a, 42a, 43a und 44a je eine Länge auf, die wenigstens annähernd über die gesamte Breite der Stapelstützfläche 30 reicht, so daß ein einziges Abstützelemente 41a, 42a, 43a oder 44a eine Lage 22 anheben kann. Die Abstandshalter 37a, 38a, 39a und 40a ermöglichen ebenso wie die Abstandshalter 37, 38, 39 und 40 gemäß Fig. 2 eine gegenseitige Durchdringung der auf Lücke gesetzten Abstützelemente 41a und 43a sowie 42a und 44a an einer Seite der Stapelstützfläche. Weiterhin können auch bei der Ausführungsform gemäß Fig. 6 einander zugeordnete Abstützelemente zu beiden Seiten der Stapelstützfläche 30 miteinander fluchten, was bei der Ausführungsform gemäß Fig. 6 bezüglich der Abstützelemente 41a und 44a einerseits sowie 43a und 42a andererseits der Fall ist. Während jedoch bei der Ausführungsform gemäß Fig. 2 die miteinander fluchtenden Abstützelemente 41 und 42 bzw. 43 und 44 in horizontaler Richtung relativbeweglich sind und einander deswegen nicht berühren, weil in ihrer engstmöglich benachbarten Stellung ein Abstand zwischen ihren Spitzen verbleibt, wird eine solche gegenseitige Berührung der gegebenenfalls miteinander fluchtenden Abstützelemente 41a und 44a sowie 43a und 42a dadurch ausgeschlossen, daß sie unveränderlichen Horizontalabstand voneinander besitzen, also synchron gleichsinning in Horizontalrichtung bewegt werden. Dabei sind die Bewegungswege zum Einfahren und Ausfahren infolge der größeren Länge der Abstützelemente 41a, 42a, 43a und 44a natürlich entsprechend größer als im Falle der Abstützelemente 41, 42, 43 und 44, die bei Produktionslinien mit Standardprogramm relativ großer Breiten vergleichsweise kurz ausgebildet sein können, da sie nur so weit in den Stapelraum 23 hineinragen müssen, um die großflächigen Mineralfaserplatten 21 ausreichend abzustützen, so daß sich besonders kleine Ein- und Ausfahrwege mit entsprechender Zeitersparnis ergeben können. Dafür aber bietet die Ausführungsform gemäß Fig. 6 den Vorteil, daß insgesamt vier Hebeeinrichtungen 26a, 27a, 28a und 29a alternierend arbeiten und Nutzhübe erzeugen, so daß die Gesamtvorrichtung zur Erzielung einer gewünschten Taktzahl insgesamt langsamer laufen kann.

In der Darstellung gemäß Fig. 6a ist soeben eine erste Lage $22_1$ auf die Stapelstützfläche 30 aufgelaufen und von dem nicht näher dargestellten hinteren Stauanschlag 47 abgestoppt worden. Sämtliche Abstützelemente 41a, 42a, 43a und 44a sind in dieser Ausgangsstellung in einer Höhenlage unmittelbar unterhalb der Stapelstützfläche 30 angeordnet, wobei die Abstützelemente 41a und 42a unter die Stapelstützfläche 30 eingefahren sind. Diese Stellung entspricht im wesentlichen der Ausgangsstellung, wie sie für die Ausführungsform der Stapelvorrichtung 11 gemäß Fig. 2 in den Fig. 4a und 4l dargestellt ist.

Aus der Stellung gemäß Fig. 6a wird nun die soeben eingelaufene Lage $22_1$ durch das Abstützelemente 41a in die Stellung gemäß Fig. 6b um die Höhe $h_1$ angehoben, so daß die Stapelstützfläche 30 für einen Einlauf der nachfolgenden Lage $22_2$ freigemacht wird. In Fig. 6b ist die Lage $22_2$ bereits in ihrer Einlaufstellung auf die Stapelstützfläche 30 dargestellt. Diese Stellung entspricht im wesentlichen der Stellung gemäß den Fig. 4c und 4n für die Ausführungsform der Stapelvorrichtung 11 gemäß Fig. 2.

In Fig. 6c ist eine Zwischenstellung während der nachfolgenden Hubbewegung dargestellt, in der das Abstützelemente 42a wiederum um die Höhe $h_1$ angehoben wird und dabei die neue Lage $22_2$ anhebt, während das darüberliegende Abstützelement 41a mit der darauf angeordneten Lage $22_1$ um die Höhe $h_2$ nach oben ausweicht und dabei seitlich aus dem Spalt zwischen den Lagen $22_1$ und $22_2$ ausfährt, so daß die Lage $22_1$ auf die Lage $22_2$ abgelegt wird. In Fig. 6c ist dabei, ebenso wie bei den nachfolgenden Fig. 6e, 6g und 6i das ausfahrende Abstützelement zur Verbesserung der Übersichtlichkeit bereits realtiv weit ausgefahren dargestellt, obwohl im Zuge der kurzen Hubbewegung selbst dann, wenn dabei bereits die Ausfahrbewegung beginnt, erst ein kurzer Anfangsteil des gegenüber dem Hubweg erheblich längeren Ausfahrweges zurückgelegt ist. Die Stellung gemäß Fig. 6c entspricht im wesentlichen einer Zwischenstellung zwischen den Fig. 4c und 4d bzw. 4n und 4o für die Ausführungsform gemäß Fig. 2.

In der Stellung gemäß Fig. 6d sind die Hub- und Ausfahrbewegungen, die vorstehend im Zusammenhang mit Fig. 6c erläutert sind, abgeschlossen, so daß das Abstützelement 42a in der Höhe $h_1$ über der Stapelstützfläche 30 steht, während das Abstützelemente 41a seitlich aus dem Spalt zwischen den Lagen $22_1$ und $22_2$ ausgefahren ist und in der Höhe $h_1 + h_2$ über der Stapelstützfläche 30 steht. Im Zuge der Ausfahrbewegung des Abstützelementes 41a ist in der aus den Fig. 6c und 6d ersichtlichen Weise das hiermit horizontal synchron laufende Abstützelement 44a in den Bereich unter der Stapelstützfläche 30 eingefahren. In der Stellung gemäß Fig. 6d ist die Stapelstützfläche 30 frei für den Einlauf der folgenden Lage $22_3$, die in Fig. 6d als bereits auf der Stapelstützfläche 30 laufend dargestellt ist. Die Stellung gemäß Fig. 6d entspricht somit der Stellung gemäß Fig. 4e und 4p der Ausführungsform gemäß Fig. 2.

In Fig. 6e ist wiederum eine Zwischenstellung während der nun folgenden Hubbewegung des Abstützelementes 44a zum Anheben der neu eingelaufenen Lage $22_3$ und der Ausfahrbewegung des Abstützelementes 42a aus dem Spalt zwischen der Lage $22_3$ und dem Teilstapel aus den Lagen $22_1$ und $22_2$ dargestellt, wobei im Zuge der Ausfahrbewegung des Abstützelementes 42a das hiermit in horizontaler Richtung synchron laufende Abstützelement 43a unter die Stapelstützfläche 30 einläuft. Diese Zeit steht weiterhin dem Abstützelement 41a, welches gemäß Fig. 6d aus dem Bereich der Stapelstützfläche 30 seitlich ausgefahren ist, zur Verfügung, über die Höhe $h_1 + h_2$ abgesenkt zu werden, in Vorbereitung seiner Einfahrbewegung unter die Stapelstützfläche 30. Die Stellung gemäß Fig. 6e entspricht im wesentlichen einer Zwischenstellung zwischen den Fig. 4f und 4g der Ausführungsform gemäß Fig. 2. Die Fig. 4g entsprechende Stellung ist in Fig. 6f erreicht, in der das Abstützelement 44a die Hubhöhe $h_1$ erreicht hat und dabei den aus den Lagen $22_1$, $22_2$ und $22_3$ bestehenden Teilstapel abstützt, während die neue Lage $22_4$, entsprechend der Stellung gemäß den Fig. 4h und 4s der Ausführungsform gemäß Fig. 2, bereits auf die Stapelstützfläche 30 einläuft. Das Abstützelement 42a ist vollends seitlich aus dem Bereich der Stapelstützfläche 30 und dem Spalt über der Lage $22_3$ ausgefahren und hat die Lagen $22_1$ und $22_2$ auf die Lage $22_3$ abgesetzt. Synchron mit der Ausfahrbewegung des Abstützelementes 42a ist das Abstützelement 43a unter die Stapelstützfläche 30 eingefahren und steht für den Hub der neuen Lage $22_4$ zur Verfügung, sobald diese am hinteren Stauanschlag 47 abgestoppt ist. Das Abstützelement 41a hat seine untere Endstellung in der Ebene unterhalb der Stapelstützfläche 30 erreicht und steht zum Einfahren unter die Stapelstützfläche 30 bereit.

Fig. 6g zeigt wiederum eine Zwischenstellung, in der die neue Lage $22_4$ vom Abstützelement 43a angehoben wird, während das Abstützelement 44a nach oben ausweicht und dabei aus dem Spalt oberhalb der neuen Lage $22_4$ seitlich herausgezogen wird. Im Zuge der seitlichen Ausfahrbewegung des Abstützelementes 44a fährt das horizontal synchron laufende Abstützelement 41a unter die Stapelstützfläche 30 ein. Gemäß Fig. 6h ist die Endstellung des in Fig. 6g veranschaulichten Bewegungszustandes erreicht, in dem das Abstützelement 44a vollständig aus dem Bereich der Stapelstützfläche 30 ausgefahren ist und in der Höhe $h_1 + h_2$ steht, während das Abstützelement 43a die neue Lage $22_4$ um die Höhe $h_1$ angehoben hat, so daß die Stapelstützfläche 30 wiederum frei ist für den Einlauf einer neuen Lage $22_5$, die in Fig. 6h als bereits auf die Stapelstützfläche 30 auflaufend dargestellt ist. Das Abstützelement 41a ist vollständig unter die Stapelstützfläche 30 eingefahren und steht für einen Hub der einlaufenden neuen Lage $22_5$ zur Verfügung, sobald diese am hinteren Stauanschlag 47 abgestoppt ist. Entsprechend ist das in Horizontalrichtung synchron laufende Abstützelement 44a vollends seitlich aus dem Stapelbereich ausgefahren und steht in der Höhe $h_1 + h_2$.

Die Hubbewegung der neuen Lage $22_5$ erfolgt nunmehr gemäß Fig. 6i durch Anhebung des Abstützelementes 41a, während das den zuvor gebildeten Teilstapel unterstützende Abstützelement 43a nach oben ausweicht und seitlich aus dem Stapel herausgezogen wird. Im Zuge dieser seitlichen Ausfahrbewegung des Abstützelementes 43a fährt das Abstützelement 42a unter die Stapelstützfläche 30 ein, und wurde das Abstützelement 44a um die Höhe $h_1 + h_2$ unter die Ebene der Stapelstützfläche 30 abgesenkt.

In der Stellung gemäß Fig. 6j ist die Lage $22_5$ um die Höhe $h_1$ angehoben, so daß die Stapelstützfläche 30 wieder frei ist für den Einlauf der nächsten Lage $22_6$, die bereits auf die Stapelstützfläche 30 einläuft. Das Abstützelement 43a ist vollständig aus dem Stapel ausgefahren, und entsprechend das Abstützelement 42a vollständig unter die Stapelstützfläche 30 eingefahren.

Es sei angenommen, daß im vorliegenden Fall sechs Lagen 22 einen fertigen Stapel bilden sollen. Dann entspricht die Darstellung in Fig. 6j derjenigen gemäß Fig. 4h und 4s oder 4i und 4t der Ausführungsform gemäß Fig. 2, mit dem Unterschied, daß der vom angehobenen Abstützelement 41a abgestützte, zuvor gebildete Teilstapel nicht drei, sondern fünf Lagen 22 umfaßt. Wenn sodann Fig. 6k die Hubbewegung des für einen Hub der Lage $22_6$ an sich bereitstehenden Abstützelementes 42a unterbleibt, und lediglich das Abstützelement 41a unter dem zuvor gebildeten Teilstapel aus fünf Lagen 22 seitlich herausfährt und diese auf die neue Lage $22_6$ absetzt, wobei zwangsläufig das Abstützelement 44a ebenfalls unter die Stapelstützfläche 30 eingefahren wird, so liegt entsprechend der Darstellung in Fig. 4j und 4u für die Ausführungsform gemäß Fig. 2 der fertige, hier aus sechs Lagen 22 bestehende Stapel auf der Stapelstützfläche 30 auf und kann nach Absenkung des hinteren Stauanschlages 47 auf das Auslaufband 20 auslaufen, um Platz für die nicht näher dargestellte nächste Lage ($22_7$) zu schaffen, welche wie die Lage $22_1$ gemäß Fig. 6a die erste Lage für einen neuen Stapel aus sechs Lagen 22 bildet und an dem erneut angehobenen Stauanschlag 47 anschlägt, nachdem der fertige Stapel ausgelaufen ist. Parallel mit der Ausfahrbewegung des Abstützelementes 41a erfolgt wiederum die Absenkung des zuvor gemäß Fig. 6i ausgefahrenen Abstützelementes 43a in eine Ebene unterhalb der Stapelstützfläche 30, so daß nach dem Auslauf des gemäß Fig. 6k noch auf der Stapelstützfläche 30 liegenden Stapels aus sechs Lagen 22 die beiden Abstützelemente 42a und 44a hubbereit unter der Stapelstützfläche 30 stehen, während nach der etwa parallel zur nächsten Hubbewegung erfolgenden Absenkung des Abstützelementes 41a die beiden Abstützelemente 41a und 43a neben der Stapelstützfläche 30, jedoch auch unterhalb von deren Ebene stehen. Es ist dies eine Fig. 6a wiederum entsprechende Stellung der Abstützelemente, aus der heraus in ohne weiteres ersichtlicher Weise die Arbeitsschrittfolge gemäß den Fig. 6a bis 6k zur Bildung des nächsten Stapels durchgeführt werden kann. Wenn die erste Lage ($22_7$) des folgenden Stapels durch das Abstützelement 42a angehoben wird, so kann, wenn gewünscht, parallel auch eine Horizontalbewegung der horizontal synchron laufenden Abstützelemente 41a und 44a in der Darstellung gemäß Fig. 6k nach rechts erfolgen; um unmittelbar die Ausgangsstellung gemäß Fig. 6a wieder zu erreichen. Alternativ kann jedoch auch anstelle der in Fig. 6a veranschaulichten Ausgangsstellung eine Fig. 6k entsprechende Ausgangsstellung gewählt werden, da in jedem Falle zwei Abstützelemente 41a und 42a im Falle der Stellung gemäß Fig. 6a bzw. 42a und 44a im Falle der Stellung gemäß Fig. 6k hubbereit unter der Stapelstützfläche 30 stehen und so die ersten beiden Laden ($22_7$) und ($22_8$) des folgenden Stapels unmittelbar anheben können. Da nur dies für die Ausgangsstellung maßgeblich ist, sind die Stellungen gemäß Fig. 6a und 6k als Ausgangsstellungen gleichwertig.

Wie die vorstehenden Erläuterungen veranschaulichen, kann mit allen erläuterten Ausführungsformen der Stapelvorrichtung 11 eine Taktzeit von weniger als 2 s erreicht werden, wie dies gemäß den Erläuterungen zu Fig. 1 erforderlich ist, um die auf der dortigen Produktionslinie angelieferten Mineralfaserplatten 21 oder deren Flächenformationen kontinuierlich abzustapeln. In der Arbeitsweise gemäß den Fig. 4 oder 6 sind noch kürzere Taktzeiten möglich, da in vorteilhafter Weise jede neu einlaufende Lage 22 nach Auftreffen auf den hinteren Stauanschlag 47 sofort mit einem Zeitbedarf von nur etwa 0,2 s angehoben werden kann und dann die Stapelstützfläche 30 sofort für einen Einlauf einer folgenden Lage 22 zur Verfügung steht, die somit in einem zeitlichen Abstand von nur wenig mehr als 0,2 s einlaufen kann, während der unvermeidliche Zeitbedarf für einen vollständigen Einlauf der neuen Lage 22 zum Erreichen des hinteren Stauanschlages 47 genutzt wird, um die Abstützelemente der Stapelvorrichtung 11 für den Hub der einlaufenden neuen Lage 22 vorzubereiten.

Zumindest die in größerem Abstand vor dem Stauanschlag 47 liegenden einzelnen gabelförmigen Abstützelemente 41, 42, 43 und 44 bzw. 41a, 42a, 43a und 44a können abnehmbar an den entsprechenden Schlitten 33, 34, 35 und 36 bzw. 33a, 34a, 35a und 36a befestigt werden, so daß für eine laufende Produktion diejenigen vorderen Abstützelemente abgenommen werden können, die für eine Unterstützung der jeweiligen Lage 22 über deren Länge nicht benötigt werden. Abgesehen von der Gewichtsersparnis der bewegten Teile können derartige vordere Abstützelemente dann auch nicht mit der Vorderkante einer nachalaufenden neuen Lage 22 kollidieren, so daß diese mit dem tatsächlich für die Hubbewegung benötigten zeitlichen Abstand hinter der rückwärtigen Kante der vorlaufenden Lage 22 in die Stapelvorrichtung 11 einlaufen kann. Umgekehrt kann für großflächige, längere Mineralfaserplatten 21 die nutzbare Stapellänge dadurch vergrößert werden, daß die rückwärtige Kante ein Stück entgegen der Produktionsrichtung gemäß Pfeil 1 über die Vorderseite der vordersten Abstützelemente herausragt, so lange sichergestellt ist, daß die Abstützung an den vordersten Abstützelementen in Produktionsrichtung vor dem Schwerpunkt der hintersten Mineralfaserplatte 21 der Formation erfolgt. Für Standardprogramme großflächiger Mineralfaserplatten 21 kann darüber hinaus auch die Länge der Abstützelemente 41, 42, 43 und 44 sowie 41a, 42a, 43a und 44a auf ein Minimum verkürzt werden, welches eine Abstützung der Schwerpunkte der Mineralfaserplatten 21 sicherstellt, so daß mit der Verkürzung der Abstützelemente auch die Einund Ausfahrwege und damit der Zeitbedarf hierfür kürzer werden.

Durch die minimale Fallhöhe der einzelnen Lagen 22 bei ihrer Vereinigung mit einer eingefahrenen neuen Lage 22 wird mit der erfindungsgemäßen Stapelvorrichtung 11 ein kontrolliertes und störungsfreies sowie schonendes Ablegen des jeweils zuvor gebildeten Teilstapels auf der neuen Lage 22 erreicht. Durch entsprechende Ausbildung der Abstützelemente 41, 42, 43 und 44 bzw. 41a, 42a, 43a und 44a etwa gemäß der Darstellung in den Fig. 2 bis 6 wird außerdem eine saubere Abstützung der einzelnen Lagen sichergestellt, so daß auch Mineralfaserplatten 21 aus weichem und dünnem Material keinerlei Beschädigungen ausgesetzt sind. In Zusammenwirken mit dem Stauband 8 gewährleistet die erfindungsgemäße Stapelvorrichtung 11 darüber hinaus eine maximale Stapelkapazität für einzelne Mineralfaserplatten 21 und Plattenformationen, die zuvor auf dem Stauband 8 gebildet werden. Hierdurch wird eine hohe Produktionsleistung der Produktionslinie gewährleistet, wobei in der geschilderten Weise eine stufenlose Anpassung an unterschiedliche Längen der Mineralfaserplatten 21 erfolgen kann. Die fluchtende Beschickung und Entleerung des Stapelraumes 23 der Stapelvorrichtung 11 stellt sicher, daß nicht nur im Zuge der Bildung eines Stapels, sondern auch nach Bildung eines fertigen Stapels keinerlei Umrüstzeit od. dgl. erforderlich ist, welche bei einer kontinuierlich arbeitenden Produktionslinie zu Problemen führen würde und beispielsweise eine vorherige Zwischenspeicherung der ersten Lagen eines neuen Stapels erforderlich machen würde. Vielmehr erfolgt erfindungsgemäß das Ausfahren des fertigen Stapels im wesentlichen taktsynchron, so daß unabhängig von der erreichten Stapelstellung jede Lage 22 im gleichen Takt auf die Stapelstützfläche 30 auffahren kann und entweder an einem zuvor gebildeten Teilstapel abgestapelt wird oder die erste Lage eines neuen Stapels bildet. Da keinerlei Gleitbewegungen zwischen den Lagen 22 im Zuge der Stapelung auftreten, eignet sich die Stapelvorrichtung 11 insbesondere auch für Platten mit schlechten Gleit- und Stabilitätseigenschaften. Weiterhin können auch Platten geringer Dichte und poröser oder faseriger Struktur wie insbesondere Mineralfaserplatten 21 problemlos abgestapelt werden, da diese sanft von unten her unterstützt werden, und keine Saugnäpfe od. dgl. für die Stapelung benötigt werden. Die geringen Fallhöhen ermöglichen darüber hinaus auch eine schnelle Abstapelung leichter Lagen, zumal der überwiegende Teil der für eine Zusammenführung der Lagen erforderlichen Bewegung durch eine Hubbewegung und nicht durch eine Fallbewegung erreicht wird.

Ein besonderer Vorteil ergibt sich schließlich dadurch, daß das Stauband 8, die Stapelstützfläche 30 und das Ausfahrband 20 nicht nur miteinander fluchten, sondern auch in einer Ebene liegen, so daß bei einem Ausfall der Stapelvorrichtung 11 die Mineralfaserplatten 21, gegebenenfalls nach vorheriger Formationsbildung auf dem Stauband 8, durch die stillstehende Stapelvorrichtung 11 ohne Hindernis hindurchlaufen können und eine bei Störungen stillstehende Stapelvorrichtung 11 somit nicht zwangsläufig eine Produktionsstillegung zur Folge hat; vielmehr kann während einer solchen Störung die Stapelung in einem Notbetrieb von Hand erfolgen oder können die ungestapelten Platten auf andere Weise zwischengespeichert werden. Dies ist von besonderer Bedeutung etwa bei der Produktion von Mineralfaserplatten 21, die einen kontinuierlichen Betrieb der Schmelzwanne voraussetzt, so daß Produktionsunterbrechungen zu hohen Verlusten führen.

Wie die vorstehende Beschreibung zeigt, ist die Erfindung nicht auf die dargestellten Ausführ-

rungsformen beschränkt, sondern sind vielfache Abwandlungen möglich, ohne den Rahmen der Erfindung zu verlassen. So können etwa die Abstützelemente 41, 42, 43 und 44 sowie 41a, 42a, 43a und 44a eine abweichende Ausbildung erhalten, um eine bestmögliche, flächige Unterstützung der Lagen 22 zu erreichen. Auch kann eine in Einzelheiten abweichende Bewegungssteuerung der Abstützelemente erfolgen, soweit auch damit der angestrebte Zweck erreicht wird. In diesem Zusammenhang kann z. B. auf die synchrone Steuerung der Horizontalbewegung der Abstützelemente 41a und 44a einerseits und 42a und 43a andererseits verzichtet werden, und können alle vier Sätze von Abstützelementen 41a, 42a, 43a und 44a gemäß Fig. 6 unabhängig voneinander bewegt werden, wenn auch die Abstützelemente 41a und 44a sowie 42a und 43a gegeneinander versetzt angeordnet sind.

**Patentansprüche**

1. Vorrichtung zum Stapeln von stapelbarem Gut, insbesondere von Mineralfaserplatten (21) in einer Produktionslinie, in übereinander angeordneten Lagen (22) aus einem oder mehreren Artikeln,

a) mit einer Hebeeinrichtung (24 bzw. 25) für Lagen (22) der Artikel zur Erzielung einer Vertikalverlagerung der Lagen (22) bei der Bildung des Stapels,

b) mit einer ortsfesten unteren Stapelstützfläche (30),

c) mit einem in Einlaufrichtung der Lagen (22) hinter dem Stapelraum (23) angeordneten Anschlag (47) zur registerhaltigen Abstoppung der jeweiligen eingelaufenen neuen Lage (22) und

d) mit einer Fördereinrichtung (Rollen 45, Auslaufband 20) zur Wegförderung des fertigen Stapels,

e) wobei für die Hubbewegung wenigstens annähernd parallel zur Stapelstützfläche (30) ausgerichtet arbeitende Abstützelemente für die Lagen (22) in Form von Gabelarmen (41, 42 bzw. 43, 44) vorgesehen sind, welche von der Seite her unter den Stapel einfahrbar und nach erfolgtem Hub aus dem Stapelraum (23) wieder ausfahrbar sind, und

f) wobei die Hebeeinrichtung (24 bzw. 25) zu beiden Seiten des Stapelraums (23) angeordnete und in Horizontalrichtung gegensinnig sowie in Vertikalrichtung gleichsinnig synchron angetriebene Sätze von Gabelarmen (41, 42 bzw. 43, 44) aufweist, die je über weniger als die Hälfte der Breite der Stapelstützfläche (30) reichen,

dadurch gekennzeichnet,

g) daß zwei Hebeeinrichtungen (24, 25) vorgesehen sind, deren jeweilige Gabelarme (41, 42 bzw. 43, 44) gegenüber derjenigen der anderen Hebeeinrichtung (25, 24) in vertikaler Richtung relativ beweglich gehalten sind,

h) daß die Gabelarme (41, 42 bzw. 43, 44) beider Hebeeinrichtungen (24, 25) über Abstandshalter (37, 38, 39, 40) mit einem wenigstens der Hubhöhe ($h_1$) des Arbeitshubs entsprechenden Abstand bei der einen Hebeeinrichtung (24) an der Oberseite von unteren Lagerteilen sowie bei der anderen Hebeeinrichtung (25) an der Unterseite von oberen Lagerteilen der zugehörigen Hebeeinrichtung (24 bzw. 25) gelagert sind, und

i) daß die Gabelarme (41, 42) der einen Hebeeinrichtung (24) gegenüber den an der selben Seite des Stapelraums (23) liegenden Gabelarmen (43, 44) der anderen Hebeeinrichtung (25) seitlich um ein einen vertikalen Vorbeilauf der Gabelarme aneinander ermöglichendes Maß versetzt sind und diese bei der vertikalen Relativbewegung durchdringen.

2. Vorrichtung zum Stapeln von stapelbarem Gut, insbesondere von Mineralfaserplatten (21) in einer Produktionslinie, in übereinander angeordneten Lagen (22) aus einem oder mehreren Artikeln,

a) mit einem Satz von zwei alternierend arbeitenden Hebeeinrichtungen (26a, 29a bzw. 27a, 28a) für die Lagen (22) der Artikel zur Erzielung der Vertikalverlagerung der Lagen (22) bei der Bildung des Stapels,

mit den Merkmalen (b) bis (e) des Anspruchs 1, und

f) wobei die Sätze von Gabelarmen (41a, 44a bzw. 42a, 43a) zu beiden Seiten des Stapelraums (23) angeordnet sind, je über wenigstens annähernd die ganze Breite der Stapelstützfläche (30) reichen und relativ zu den Gabelarmen (44a, 41a bzw. 43a, 42a) der anderen Hebeeinrichtung in Vertikalrichtung beweglich sind,

dadurch gekennzeichnet,

g) daß zwei Sätze von Hebeeinrichtungen (26a, 29a und 27a, 28a) vorgesehen sind, die je paarweise zu beiden Seiten des Stapelraums (23) angeordnete Sätze von Gabelarmen (41a, 44a bzw. 42a, 43a) aufweisen, wobei die Gabelarme (41a, 44a) des einen Satzes der Hebeeinrichtungen (26a, 29a) gegenüber den Gabelarmen (42a, 43a) des anderen Satzes der Hebeeinrichtungen (27a, 28a) in horizontaler Richtung relativ beweglich gehalten sind,

h) daß die Gabelarme (41a, 42a, 43a, 44a) jeder der Hebeeinrichtungen (26a, 27a, 28a, 29a) über Abstandshalter (37a, 38a, 39a, 40a) mit einem wenigstens der Hubhöhe ($h_1$) des Arbeitshubs entsprechenden Abstand an der Unterseite von oberen Lagerteilen und an der Oberseite von unteren Lagerteilen der an der jeweils gleichen Seite des Stapelraums (23) liegenden zugehörigen Hebeeinrichtung (26a bzw. 28a oder 27a bzw. 29a) gelagert sind,

i) daß die Gabelarme (41a, 43a bzw. 42a, 44a) jeder Hebeeinrichtung (26a, 28a bzw. 27a, 29a) gegenüber den an der selben Seite des Stapelraums (23) liegenden Gabelarmen (43a, 41a bzw. 44a, 42a) der dortigen anderen Hebeeinrichtungen (28a, 26a bzw. 29a, 27a) seitlich um ein einen vertikalen Vorbeilauf der Gabelarme aneinander ermöglichendes Maß versetzt sind und diese bei der vertikalen Relativbewegung durchdringen.

3. Vorrichtung nach Anspruch 2, dadurch gekennzeichnet, daß die Gabelarme (41a, 44a bzw. 42a, 43a) je zweier, einander zu beiden Seiten des Stapelraums (23) gegenüberliegender Hebeeinrichtungen (26a, 29a bzw. 27a, 28a), die zusammen einen Satz der Hebeeinrichtungen bilden, zur Vermeidung einer gegenseitigen Durchdringung einen konstanten Horizontalabstand voneinander aufweisen.

4. Vorrichtung nach einem der Ansprüche 1 bis 3, dadurch gekennzeichnet, daß die Gabelarme (41, 42, 43, 44; 41a, 42a, 43a, 44a) in Richtung auf ihre freien Enden hin bezüglich ihrer vertikal gemessenen Dicke verjüngt ausgebildet sind.

## Claims

1. Device for stacking stackable material, especially mineral fibreboard (21) in a production line, in layers (22), arranged one above the other, consisting of one or more articles,

a) with a lifting device (24 or 25) for layers (22) of the articles for vertically displacing the layers (22) when the stack is being formed,

b) with a fixed, lower stack support surface (30),

c) with a stop (47), arranged in the entry direction of the layers (22) and behind the stacking space (23), for a recorded stoppage of the respective new layer (22) entered, and

d) with a conveyor device (rollers 45, delivery belt 20) for conveying away the prepared stack,

e) with supporting elements, working in an aligned manner for the lifting movement at least approximately parallel to the stack support surface (30), for the layers (22) being provided in the form of fork arms (41, 42 and 43, 44), which can be moved in from the side under the stack and, after lifting has been effected, can be moved out again from the stacking space and

f) with the lifting device (24 or 25) having sets of fork arms (41, 42 and 43, 44), which are arranged on both sides of the stacking space (23) and can be driven synchronously in opposite directions in the horizontal direction and in the same direction in the vertical direction, and each of which reaches less than half way across the width of the stack support surface (30),

characterised in that,

g) two lifting devices (24, 25) are provided, the respective fork arms (41, 42 and 43, 44) of which are retained relatively moveable in the vertical direction relative to those of the other lifting device (25, 24),

h) the fork arms (41, 42 and 43, 44) of both lifting devices (24, 25) are mounted by means of distance pieces (37, 38, 39, 40), at a distance corresponding to at least the lift height ($h_1$) of the working stroke, in the case of one lifting device (24) at the upper side of lower layer portions and in the case of the other lifting device (25) at the lower side of upper layer portions of the associated lifting device (24 or 25), and

i) the fork arms (41, 42) of one lifting device (24), relative to the fork arms (43, 44), located on the same side of the stacking space (23), of the other lifting device (25), are offset laterally to an extent anabling the fork arms to run past one another vertically, and pass through the latter during the relative vertical movement.

2. Device for stacking stackable material, especially mineral fibreboard (21) in a production line, in layers (22), arranged one above the other, consisting of one or more articles,

a) with a set of two alternately working lifting devices (26a, 29a and 27a, 28a) for the rear (22) of the articles for vertically displacing the layers (22) when the stack is being formed,

with the features (b) to (e) of claim 1, and

f) with the sets of fork arms (41a, 44a and 42a, 43a) being arranged on both sides of the stacking space (23), each reaching over at least approximately the entire width of the stack support surface (30) and being movable in the vertical direction relative to the fork arms (44a, 41a and 43a, 42a of the other lifting device,

characterised in that,

g) two sets of lifting devices (26a, 29a and 27a, 28a) are provided, each of which have sets of fork arms (41a, 44a or 42a, 43a) arranged in pairs on both sides of the stacking space (23), with the fork arms (41a, 44a) of one set of the lifting devices (26a, 29a) being retained relatively movable in the horizontal direction relative to the fork arms (42a, 43a) of the other set of lifting devices (27a, 28a),

h) the fork arms (41a, 42a, 43a, 44a) of each of the lifting devices (26a, 27a, 28a, 29a) are mounted by means of distance pieces (37a, 38a, 39a, 40a), at a distance corresponding to at least the lift height ($h_1$) of the working stroke, at the lower side of upper layer portions and at the upper side of lower layer portions of the associated lifting device (26a and 28a, or 27a and 29a) located respectively on the same side of the stacking area (23),

i)  the fork arms (41a, 43a or 42a, 44a) of each lifting device (26a, 28a or 27a, 29a), relative to the fork arms (43a, 41a or 44a, 42a), located on the same side of the stacking space (23), of the other lifting device (28a, 26a or 29a, 27a) there, are offset laterally to an extent enebling the fork arms to run past one another vertically, and pass through the latter during the relative vertical movement.

3. Device according to Claim 2, characterised in that the fork arms (41a, 44a and 42a, 43a) of each two lifting devices (26a, 29a and 27a, 28a) located opposite one another when both sides of the stacking space (23), the lifting devices (26a, 29a and 27a, 28a) together forming a set of lifting devices, have a constant horizontal distance from one another to avoid mutual penetration.

4. Device according to one of Claims 1 to 3, characterised in that the fork arms (41, 42, 43, 44; 41a, 42a, 43a, 44a), in the direction of their free ends, are der signed with a taper relative to their vertically measured thickness.

## Revendications

1. Dispositif pour l'empilement d'une matière empilable, en particulier de panneaux de fibre minérale (21) dans une chaîne de fabrication, en couches (22) composées d'un ou plusieurs articles et disposées l'une au-dessus de l'autre,

a)  qui comprend un dispositif élévateur (24 ou 25 respectivement) agissant sur les couches (22) d'articles pour déterminer un déplacement vertical des couches (22) lors de la formation de la pile;

b)  qui comprend une surface support de pile inférieure (30) fixe en position;

c)  qui comprend une butée (47) disposée en aval de la zone d'empilement (23) dans le sens de l'introduction des couches (22) et destinée à arrêter en bonne position la nouvelle couche (22) introduite; et

d)  qui comprend un dispositif transporteur (rouleaux 45, bande d'évacuation 20) pour l'évacution de la pile finie;

e)  où il est prévu pour le mouvement d'élévation des éléments support destinés à supporter des couches (22), qui travillent dans une orientation au moins à peu près parallèle à la surface support de pile (30), réalisés sous la forme de branches de fourches (41, 42 ou 43, 44 respectivement), et qui peuvent s'engager sous la pile par le côté et se dégager à nouveau de la zone d'empilement (23) après exécution de l'élévation; et

f)  où le dispositif élévateur (24 ou 25 respectivement) comprend des jeux de branches de fourches (41, 42 ou 43, 44 respectivement) disposés des deux côtés de la zone d'empilement (23) et entraînés en synchronisme l'un en sens inverse de l'autre dans la direction horizontale et l'un dans le même sens que l'autre dans la direction verticale, ces jeux s'étandant sur moins de la moitié de la largeur de la surface support de pile (30),

caractérisé

g)  en ce qu'il est prévu deux dispositif élévateurs (24, 25) dont les branches de fourches (41, 42 ou 43, 44 respectivement) sont tenues mobiles relativement dans la direction verticale par rapport à ceux de l'autre dispositif élévateur (25, 24);

h)  en ce que les branches de fourches (41, 42 ou 43, 44 respectivement) des deux dispositifs élévateurs (24, 25) sont montées, par l'intermédiaire d'espacement correspondant au moins à la hauteur d'élévation ($h_1$) de la course de travail, dans le cas d'un dispositif élévateur (24) sur la face supérieure d'éléments porteurs intérieurs et, dans le cas de l'autre dispositif élévateur (25), à la face inférieure d'éléments porteurs supérieurs du dispositif élévateur correspondant (24 ou 25 respectivement); et

i)  en ce que les branches de fourches (41, 42) d'un dispositif élévateur (24) sont décalées latéralement par rapport aux branches de fourches (43, 44) de l'autre dispositif élévateur (25) qui se trouve sur le même côté de la zone d'empilement (23), d'une distance qui permet aux branches de fourches de passer verticalement l'une à côté de l'autre et traversent ces branches au cours du mouvement relativ vertical.

2. Dispositif pour empiler une matière empilable, notamment des panneaux de fibre minérale (21) dans une chaîne de fabrication, en couches (22) composées d'un ou plusieurs article(s), disposées les unes au-dessus des autres,

a)  qui comprend un jeu de deux dispositifs élévateurs (26a, 29a ou 27a, 28a) servant à élever les couches (22) d'articles pour obtenir le déplacement vertical des couces (22) lors de la constituion de la pile,

et qui possède les particularités b) à e) de la revendication 1, et

f)  dans lequel les jeux de branches de fourches (41a, 44a ou 42a, 43a respectivement) sont disposés des deux côtés de la zone d'empilement (23), s'étendent chacun sur au moins à peu près toute la largeur de la surface support de pile (30) et peuvent se déplacer dans la direction verticale par rapport aux branches de fourches (44a, 41a ou 43a, 42a respectivement) de l'autre dispositif élévateur, caractérisé

g) en ce qu'il est prévu deux jeux de dispositifs élévateurs (26a, 29a et 27a, 28a) qui présentent chacun des jeux de branches de fourches (41a, 44a ou 42a, 43a) disposés par paires des deux côtés de la zone d'empilement (23), les branches de fourches (41a, 44a) d'un jeu de dispositifs élévateurs (26a, 29a) étant tenues mobiles relativement dans la direction horizontale par rapport aux branches de fourches (42a, 43a) de l'autre jeu de dispositifs élévateurs (27a, 28a);

h) en ce que les branches de fourches (41a, 42a, 43a, 44a) de chacun des dispositifs élévateurs (26a, 27a, 28a et 29a) sont montées, par l'intermédiaire d'entretoises (37a, 38a, 39a, 40a) avec une distance d'espacement correspondant au moins à la hauteur d'élévation ($h_1$) de la course de travail, à la face inférieure d'éléments porteurs supérieurs et à la face supérieure d'éléments porteurs intérieurs du dispositif élévateur (26a, 28a respectivement ou 27a, 28a respectivement) correspondant qui se trouvent du même côté de la zone d'empilement (23);

i) en ce que les branches de fourches (41a, 43a ou 42a, 44a respectivement) de chaque dispositif élévateur (26a, 28a ou 27a, 29a respectivement) sont décalées par rapport aux branches de fourches (43a, 41a ou 42a, 44a respectivement) des autres dispositifs élévateurs (28a, 26a ou 27a, 29a respectivement) qui se trouvent sur le même côté de la zone d'empilement (23), d'une distance qui permet aux branches de fourches de passer verticalement les unes à côté des autres, et traversent celles-ci pendant le mouvement relatif vertical.

3. Dispositif d'empilement selon la revendication 2, caractérisé en ce que les branches de fourches (41a, 44a ou 42a, 43a respectivement) de deux dispositifs élévateurs (26a, 29a ou 27a, 28a respectivement) qui se font face des deux côtés de la zone d'empilement (23), qui forment ensemble un jeu de dispositif élévateurs, présentent un espacement horizontal constant pour éviter de se traverser mutuellement.

4. Dispositif selon l'une des revendication 1 à 3, caractérisé en ce que les branches de fourches (41, 42, 43 et 44; 41a, 42a, 43a et 44a) sont d'une configuration qui s'amincit en direction de leurs extrémités libres, en ce qui concerne leur épaisseur mesurée dans la direction verticale.

**Fig. 1** (I)

Fig. 1 (II)

0 032 367

_Fig. 2_

Fig. 3

Fig. 4

Fig. 4 e
f
g
h

$Fig. 4$

i

j

k

Fig. 4

*l*

*m*

*n*

*o*

22₂ 25 30 11 42/41 22₁ 48 47
8 10 24 45 45 44/43

22₂ 25 44/43 22₁
30 h₁ 48/47
10 24 45 42/41

22₃ 44/43 22₁
30 22₂
48/47
10 42/41 45 42/41

25 44/43 22₁
24 30 22₂
22₃ h₁ 42/41
10 48/47
45

0 032 367

Fig. 4

0 032 367

**Fig. 4**

t

$22_5$

$44/43$

$22_1$
$22_2$
$22_3$

$25$

$30$

$44/43$

$22_4$

$8$

$10$

$45$

$45$

$24$

$42/41$

$45$

$48$

$47$

u

$22_5$

$44/43$

$44/43$

$22_1$
$22_2$
$22_3$
$22_4$

$8$

$10$

$42/41$

$45$

$47$

v

$22_6$

$22_5$

$22_1$
$22_2$
$22_3$
$22_4$

$8$

$10$

$44/43$

$42/41$

$45$

$47/48$

$20$

Fig. 5a

Fig. 5b

Fig. 5c

Fig. 5d

Fig. 5e

0 032 367

Fig. 6a

Fig. 6b

**Fig. 6 c**

**Fig. 6 d**

## Fig. 6 e

$221$
$222$
$41a$
$223$
$42a$

$h_1 + h_2$

$30$

$44a$

$43a$

$45$

## Fig. 6 f

$221$
$222$
$223$
$42a$

$41a$

$h_1$

$44a$

$224$

$43a$      $45$    $30$

0 032 367

## $\textbf{\textit{Fig. 6}}\,g$

## $\textbf{\textit{Fig. 6}}\,h$

0 032 367

_Fig. 6 i_

_Fig. 6 j_

$22_1$
$22_2$
$22_3$
$22_4$
$22_5$
$22_6$
43a
30
44a
$h_1$
41a
45
42a

_Fig. 6 k_

$22_1$
$22_2$
$22_3$
$22_4$
$22_5$
$22_6$
41a
43a
44a
45
42a

0 032 367